# EUROPEAN PATENT SPECIFICATION

(11) **EP 3 131 257 B1**
(45) Date of publication and mention of the grant of the patent: **02.05.2018**
(21) Application number: 16160802.1
(22) Date of filing: 17.03.2016
(51) Int. Cl.: H04L 29/06, H04M 3/56, H04L 12/18

(54) **PROGRAM, INFORMATION PROCESSING APPARATUS, AND INFORMATION PROCESSING SYSTEM FOR USE IN AN ELECTRONIC CONFERENCE SYSTEM**
PROGRAMM, INFORMATIONSVERARBEITUNGSVORRICHTUNG UND INFORMATIONSVERARBEITUNGSSYSTEM ZUR VERWENDUNG IN EINEM ELEKTRONISCHEN KONFERENZSYSTEM
PROGRAMME, APPAREIL DE TRAITEMENT D'INFORMATIONS ET SYSTÈME DE TRAITEMENT D'INFORMATIONS À UTILISER DANS UN SYSTÈME DE CONFÉRENCE ÉLECTRONIQUE

(30) Priority: 12.08.2015 JP 2015159611; 17.08.2015 JP 2015160486; 07.09.2015 JP 2015175948
(43) Date of publication of application: 15.02.2017
(73) Proprietor: Fuji Xerox Co., Ltd., Minato-ku, Tokyo (JP)
(72) Inventor: INOMATA, Kohshiro, Kanagawa (JP); FUKASAWA, Tetsuo, Kanagawa (JP)
(74) Representative: Ward, James Norman

(56) References cited:
- JP-A- 2002 109 099
- US-A1- 2005 228 861
- US-A1- 2009 041 524
- US-A1- 2011 167 357
- US-A1- 2012 296 914

## Description

### BACKGROUND

### (i) Technical Field

The present invention relates to a program, an information processing apparatus, and an information processing system.

### (ii) Related Art

In recent years, so-called electronic conference systems, in which a PC, a tablet terminal, and the like are connected to each other through a network to electronically share materials, sound, video data, and the like, have been used. In such an electronic conference system, there has been proposed a technique for recording multimedia information (multimedia data) such as sound exchanged during a conference or a video obtained by capturing the state of the conference, for the purpose of mainly creating minutes of the conference, and the like. For example, JP-A-11-205314 discloses a system for recording and reproducing media data of a conference for each user in time series. Document US2005228861 discloses a solution for efficiently reducing the amount of data of the minutes of multimedia information, lessen the burden of transmission to a remote location, realize automatic creation of a minute file and efficient access to the minute file. Document US2012296914 discloses techniques for capturing events and activities that occur during a conference, generating metadata related to the events, and correlating the metadata with specific points in time. Document US2011167357 discloses methods and systems for scenario-based content categorization, retrieval, and presentation.

### SUMMARY

However, since the system of JP-A-11-205314 records the media data only in time series, at the time of reproduction, it has been only possible to reproduce the media data in time series in order, or to reproduce the media data based on a time chapter, and it is difficult to selectively reproduce only a portion which meets a predetermined condition. For example, in a case where an agenda is changed or a presenter is changed during a conference, when it is desired to reproduce a sound from the changed portion, it is difficult to easily reproduce the sound unless the changed timing is known. Accordingly, it is necessary to reproduce all record of the conference from the beginning.

The invention has been made in view of the above circumstances, and an object thereof is to provide a non-transitory computer readable medium, an information processing apparatus, a program, and an information processing system which record media data such that the efficiency at the time of reproduction of the media data which is transported or received between the plurality of terminals can be improved.

According to a first aspect of the invention, there is provided a program causing a computer to transmit and receive multimedia data including at least one of sound data and video data between a plurality of terminals connected to each other through a network to communicate with each other, the program causing the computer to function as: a detection section that detects an event occurring when the plurality of terminals communicate with each other; and an association section that associates event information relating to the event with the multimedia data based on time information included in the multimedia data and a time when the detection section detects the event.

A second aspect of the invention is directed to the program according to the first aspect, which causes the computer to further function as: a receiving section that receives operation information indicating details of an operation that a user performs on one of the terminals; and a determination section that refers to a storage section that stores the operation information and an event information type indicating a type of the event information corresponding to the operation information in association with each other, to determine the event information type corresponding to the operation information received by the receiving section, wherein the association section associates the event information corresponding to the event information type with the multimedia data.

A third aspect of the invention is directed to the program according to the second aspect, wherein the storage section stores the operation information, user information for identifying a user having performed the operation and the event information type corresponding to the operation information in association with each other, and the determination section determines the event information type corresponding to the operation information received by the receiving section and the user information.

A fourth aspect of the invention is directed to the program according to the first aspect, wherein when the detection section detects as the event a user's operation to switch between pages of a material used in a conference, the association section associates the event information including time information indicating a time when the user switches between the pages, a page number before the user switches between the pages, and user information of the user who switches between the pages, with the multimedia data.

A fifth aspect of the invention is directed to the program according to the first aspect, wherein when the detection section detects a user's operation to select a submitted message as the event, the association section associates the event information including time information indicating a time when the user selected the message, details of the selected message, and user information of the user who selects the message with the multimedia data.

A sixth aspect of the invention is directed to the program according to the first aspect, wherein when the detection section detects an operation to change a user who makes a presentation in a conference as the event, the association section associates the event information including time information indicating a time when the user who makes the presentation is changed, and user information of the user who makes the presentation before the change with the multimedia data.

A seventh aspect of the invention is directed to the program according to the first aspect, which causes the computer to further function as: a receiving section that receives from a user a request for reproduction of the multimedia data corresponding to the event; and a reproduction section that reproduces the multimedia data, wherein the reproduction section reproduces a portion, corresponding to the event selected by the user, of the multimedia data.

According to an eighth aspect of the invention, there is provided an information processing apparatus that transmits and receives multimedia data including at least one of sound data and video data between a plurality of terminals connected to each other through a network to communicate with each other, the information processing apparatus comprising: a detection section that detects an event occurring when the plurality of terminals communicate with each other; and an association section that associates event information relating to the event with the multimedia data based on time information included in the multimedia data and a time when the detection section detects the event.

According to a ninth aspect of the invention, there is provided an information processing system that transmits and receives multimedia data including at least one of sound data and video data between a plurality of terminals connected to each other through a network to communicate with each other, the information processing system comprising: a detection section that detects an event occurring when the plurality of terminals communicate with each other; and an association section that associates event information relating to the event with the multimedia data based on time information included in the multimedia data and a time when the detection section detects the event.

A tenth aspect of the invention is directed to the program according to the first aspect, wherein the detection section detects the event occurring when the computer and the terminals are communicating the multimedia data with each other.

An eleventh aspect of the invention is directed to the program according to the first aspect, wherein the events detected by the detection section is one selected from the group consisting of: a presenter's operation to switch between pages of a material used in a conference, the presenter making a presentation in a conference, a participant's operation to switch between pages of the material, the participant being different from the presenter, an operation to change the presenter to another person, an operation to enter the conference, an operation to exit the conference, an operation to select a comment submitted during the conference, an operation to input a handwritten character, and an operation to totalize a questionnaire.

A twelfth aspect of the invention is directed to the program according to the first aspect, wherein the event information includes event identification information, sound time information indicating a sound starting time and a sound termination time, and information indicating details of the event.

According to the first, eighth, ninth, tenth and eleventh aspects of the invention, the efficiency at the time of reproduction of the media data which is transported or received between the plurality of terminals can be improved.

According to the second aspect of the invention, the event information corresponding to the event information type corresponding to the operation information indicating the details of the operation that a user performs is associated with the media data.

According to the third aspect of the invention, the event information type corresponding to the operation information of the user and the user information is determined.

According to the fourth aspect of the invention, the time information indicating a time when the user switches between pages, the page number before the user switches between the pages, and the user information of the user who switches between the pages are associated with the media data.

According to the fifth aspect of the invention, the time information indicating a time when the user selected the message, the details of the selected message, and the user information of the user who selects the message are associated with the media data.

According to the sixth aspect of the invention, the time information indicating a time when the user who makes the presentation is changed and the user information of the user who makes the presentation before the change are associated with the media data.

According to the seventh aspect of the invention, the media data of the portion, corresponding to the event selected by the user, of the media data is reproduced.

According to the twelfth aspect of the invention, the event information including the event identification information, the sound starting time, the sound termination time and the details of the event is associated with the media data.

### BRIEF DESCRIPTION OF THE DRAWINGS

Exemplary embodiments of the present invention will be described in detail based on the following figures, wherein:
Fig. 1 is a configuration diagram illustrating the entire electronic conference system according to an exemplary embodiment;
Fig. 2 is a block diagram illustrating a hardware configuration of an electronic conference system;
Fig. 3 is a functional block diagram illustrating specific configurations of a terminal management server and a multimedia data management server;
Fig. 4 is a diagram illustrating an example of a display content displayed on a display screen of a presenter terminal;
Fig. 5 is a functional block diagram illustrating a specific configuration of a terminal;
Fig. 6 is a functional block diagram illustrating a specific configuration of a terminal;
Fig. 7 is a diagram illustrating an example of a transmission terminal list;
Fig. 8 is a diagram illustrating an example of a reception terminal list;
Fig. 9 is a diagram illustrating an example of an updated reception terminal list;
Fig. 10 is a diagram illustrating an example of a network configuration showing communication channels;
Fig. 11 is a diagram illustrating an example of a network configuration showing communication channels;
Fig. 12 is a diagram illustrating an example of a network configuration showing communication channels;
Fig. 13 is a flow chart illustrating an operation of the electronic conference system;
Fig. 14 is a flow chart illustrating the operation of the electronic conference system;
Fig. 15 is a flow chart illustrating the operation of the electronic conference system;
Fig. 16 is a diagram illustrating an example of a metadata type determination table;
Fig. 17 is a diagram illustrating an example of a metadata management table;
Fig. 18 is a diagram illustrating details of a series of events occurring in one conference;
Fig. 19 is a diagram illustrating an example of a message management table;
Fig. 20 is a schematic diagram illustrating sound data and metadata;
Fig. 21 is a flow chart illustrating the operation of the electronic conference system;
Fig. 22 is a flow chart illustrating the operation of the electronic conference system;
Fig. 23 is a diagram illustrating an example of the metadata management table;
Fig. 24 is a diagram illustrating an example of the metadata management table;
Fig. 25 is a diagram illustrating an example of the metadata management table;
Fig. 26 is a diagram illustrating an example of the metadata management table;
Fig. 27 is a functional block diagram illustrating a specific configuration of a terminal management server according to Modification Example 1;
Fig. 28 is a diagram illustrating an example of a network configuration of an electronic conference system;
Fig. 29 is a diagram illustrating an example of a reception terminal list;
Fig. 30 is a diagram illustrating an example of a network configuration illustrating communication channels according to Modification Example 1; and
Fig. 31 is a diagram illustrating an example of a network configuration of an electronic conference system.

### DETAILED DESCRIPTION

Hereinafter, an exemplary embodiment of the present invention will be described with reference to the accompanying drawings. In the exemplary embodiment, as an example of an information processing system, a description will be given of an electronic conference system in which electronic data such as a material and multimedia data such as sound data and image data are shared (synchronized) by plural terminals that communicate with each other by being connected to each other through a network.

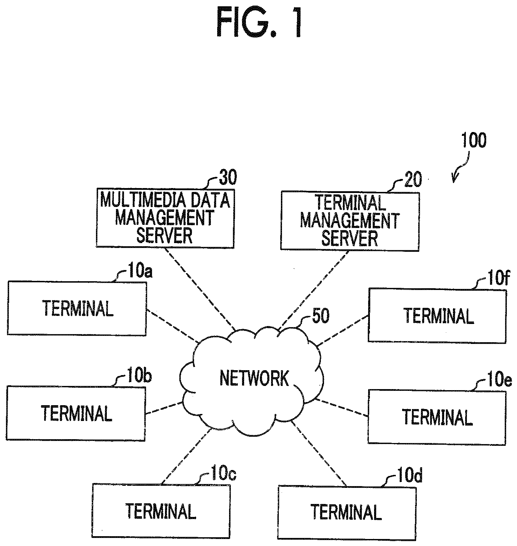

Fig. 1 is a configuration diagram illustrating the entire electronic conference system according to the exemplary embodiment. An electronic conference system 100 (information processing system) is configured to include plural terminals 10 that are used (operated) by plural users participating in a conference, a terminal management server 20 that manages the terminals 10, and a multimedia data management server 30 that manages multimedia data such as a sound and video in a conference. The terminal management server 20 and the multimedia data management server 30 may be included in one information processing apparatus. In addition, the terminal 10 and the terminal management server 20 may be included in one information processing apparatus, the terminal 10 and the multimedia data management server 30 may be included in one information processing apparatus, and the terminal 10, the terminal management server 20, and the multimedia data management server 30 may be included in one information processing apparatus. In the exemplary embodiment, a user making a presentation in a conference will be referred to as a "presenter", and a terminal used by a presenter will be referred to as a "presenter terminal" when necessary. In addition, a user attending a conference, except for a presenter, will be referred to as a "participant", and a terminal used by a participant will be referred to as a "participant terminal". For example, in Fig. 1, when a terminal 10a serves as a presenter terminal, the other five terminals 10b, 10c, 10d, 10e, and 10f serve as participant terminals. Each of the terminals 10 may serve as either a presenter terminal or a participant terminal. In addition, a presenter terminal is given an operation right, and thus a display screen corresponding to details of an operation that a presenter performs on the presenter terminal is synchronously displayed on another participant terminal. In addition, a presenter may have a speaking right (sound transmission right) speak about a material or the like in a conference. Meanwhile, the speaking right may belong to one user or may belong to plural users. Hereinafter, when functions which are common to the presenter terminal and the participant terminal are described, the terminals may be collectively referred to as a terminal 10.

Each of the terminals 10 includes both a transmission function of transmitting sound data uttered by a user's speaking and a reception function of receiving the sound data. Thereby, for example, a presenter can operate a material displayed on his or her terminal 10 to cause a terminal 10 of a participant to synchronously display the result, can speak about a description regarding the material, and can cause the terminal 10 of the participant to output what he/she speaks.

As illustrated in Fig. 1, the terminals 10a, 10b, 10c, 10d, 10e, and 10f, the terminal management server 20, and the multimedia data management server 30 are connected to each other through a communication network 50 such as a local area network (LAN) or the Internet.

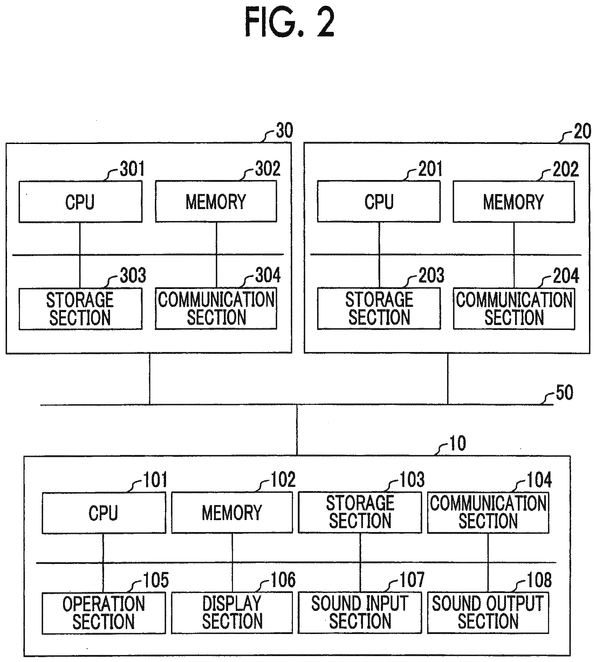

Fig. 2 is a block diagram illustrating hardware configurations of the terminal 10, the terminal management server 20, and the multimedia data management server 30.

The terminal 10 is configured with a computer including a CPU 101, a memory 102, a storage section 103, a communication section 104, an operation section 105, a display section 106, a sound input section 107, and a sound output section 108. The hardware elements are connected to each other by a bus so as to give and receive data to and from each other. The CPU 101 controls each section of the terminal 10, and executes various types of information processing. The memory 102 stores various types of programs and data. A work area of the CPU 101 is also secured in the memory 102. The storage section 103 stores data such as various types of files or documents. The communication section 104 performs data communication with the terminal management server 20, the multimedia data management server 30, and other terminals 10 through the communication network 50. The operation section 105 is an input device such as a keyboard, a mouse, a pen tool, or a touch panel. The display section 106 is a display screen that displays various types of files and documents through application software such as a Web browser. In addition, the display section 106 displays an operation screen for receiving a user's operation in a conference, a material used in the conference, and the like. The sound input section 107 is a microphone to which a sound of a user speaking in the conference is input. The sound output section 108 is a speaker that outputs sound data received from another terminal 10 as a sound in the conference. The storage section 103, the operation section 105, the display section 106, the sound input section 107, and the sound output section 108 may be provided outside the terminal 10, and may be connected to the terminal 10 through the communication network 50. When the state of a conference is captured to be stored as video data (multimedia data), a camera may be mounted on the terminal 10, the terminal management server 20, or the like.

The terminal 10 is a terminal which is used by a user attending a conference. Software such as a browser or an e-mail client is embedded in the terminal 10. The terminal 10 is a portable information terminal such as a personal computer, a personal digital assistant (PDA), or a smartphone. Meanwhile, one terminal 10 may be, for example, one browser, may be one window in a browser, or may be one application program.

The terminal management server 20 is configured with a computer including a CPU 201, a memory 202, a storage section 203, and a communication section 204. The hardware elements are connected to each other by a bus so as to give and receive data to and from each other. The CPU 201 controls each section of the terminal management server 20 and executes various pieces of information processing. The memory 202 stores various types of programs and data. A work area of the CPU 201 is also secured in the memory 202. The storage section 203 stores data such as various types of files or documents. The communication section 204 performs data communication with other terminals and the server through the communication network 50. The storage section 203 may be provided outside the terminal management server 20, and may be connected to the terminal management server 20 through the communication network 50.

The multimedia data management server 30 is configured with a computer including a CPU 301, a memory 302, a storage section 303, and a communication section 304. These hardware elements are connected to each other by a bus so as to send and receive data to and from each other. The CPU 301 controls each section of the multimedia data management server 30, and executes various pieces of information processing. The memory 302 stores various types of programs and data. A work area of the CPU 301 is also secured in the memory 302. The storage section 303 stores multimedia data such as various types of sound data and video data. Meanwhile, hereinafter, sound data will be described as an example of multimedia data. The communication section 304 performs data communication with other terminals and the server through the communication network 50. The storage section 303 may be provided outside the multimedia data management server 30, and may be connected to the multimedia data management server 30 through the communication network 50.

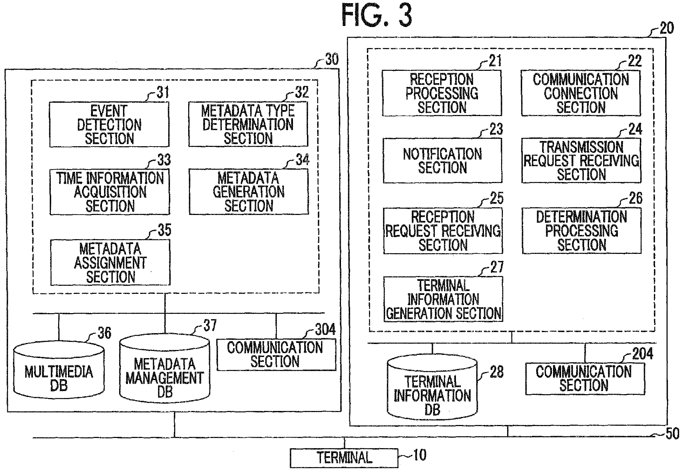

Fig. 3 is a functional block diagram illustrating a specific configuration of the electronic conference system 100. Fig. 3 illustrates specific configurations of the terminal management server 20 and the multimedia data management server 30.

The terminal management server 20 includes a reception processing section 21, a communication connection section 22, a notification section 23, a transmission request receiving section 24, a reception request receiving section 25, a determination processing section 26, and a terminal information generation section 27. These components are realized by the CPU 201 executing a program stored in the memory 202. The storage section 203 includes a terminal information database (terminal information DB 28) that stores terminal information.

The program may be installed in the terminal management server 20 from a computer-readable information storage medium such as a CD-ROM, a DVD-ROM, or a memory card, may be downloaded through the communication network 50 such as the Internet, or may be downloaded from a server in which the program is stored in advance.

In addition, the program may be installed in each of the terminals 10. For example, the program may be downloaded to a memory of each of the terminals 10 from the terminal management server 20 at a point in time that each of the terminals 10 is connected to the terminal management server 20, or material data for a conference may be downloaded to a storage section. The program and material data may be constituted by, for example, JavaScript (registered trademark). The terminal 10 having the program downloaded thereto or recorded therein functions as an information processing apparatus. In addition, a computer having the program downloaded thereto may be the terminal 10 or may be the terminal management server 20.

In the electronic conference system 100 according to the exemplary embodiment, the terminal management server 20 has a program for realizing each function illustrated in Fig. 3. In addition, when each of the terminals 10 is connected to the terminal management server 20 and is authenticated, for example, data of a material used in a conference, a display control program for controlling contents displayed (synchronous display is included) on a display section of each of the terminals 10, and a communication channel control program for controlling the establishment and disconnection of a communication channel for transmitting and receiving sound data are downloaded to the terminal 10.

### Synchronous Display Process

Next, a function for realizing a synchronous display process in the electronic conference system 100 will be described.

The reception processing section 21 receives pieces of information (operation information, request information, and the like) corresponding to details of an operation that a user performs in each of the terminals 10, and executes a process according to the information. An example of the operation information includes details of an operation that presenter performs (display a new material, switch between pages of a material, or the like) during a conference in session. Examples of the request information include a request for connection to and a request for disconnection from the terminal management server 20 of the terminal 10, and the like.

The communication connection section 22 connects and disconnects communication with the terminal 10 in response to the request for connection or the request for disconnection which is received from the terminal 10. A communication standard used in the electronic conference system 100 is not particularly limited, but for example, a web socket is preferable. Meanwhile, a method of authenticating connection to the terminal 10 is not particularly limited, but a known technique may be used.

The notification section 23 notifies each participant terminal of a presenter's operation information (presenter operation information) at the time of starting a conference and during the conference. The presenter operation information is information indicating operation details such as displaying a new material, writing in a material using a pen tool (handwriting tool), picking up (selecting) a submitted comment, switching between pages of a material, inputting and moving a mouse pointer, and the like. For example, when the notification section 23 receives presenter operation information (information such as a material ID and a page number, for example, in a case where a presenter switches between pages of a material) from a presenter terminal, the notification section notifies a participant terminal of the information. When the participant terminal receives the information, the participant terminal reads out material data corresponding to the material ID and the page number from its storage section and displays the material data on a display screen.

Here, a specific example of synchronous display in a conference will be described. Here, it is assumed that the terminal 10a is determined to be a presenter terminal (is given an operation right) and the terminals 10b, 10c, 10d, 10e, and 10f are determined to be participant terminals. When the reception processing section 21 receives presenter operation information from the presenter terminal 10a, the notification section 23 notifies the participant terminals 10b, 10c, 10d, 10e, and 10f of the presenter operation information. For example, the reception processing section 21 receives, from the presenter terminal 10a, information indicating operation details such as displaying a new material, writing in a material using a pen tool (handwriting tool), picking up (selecting) a submitted comment, switching between pages of a material, and inputting and moving a mouse pointer.

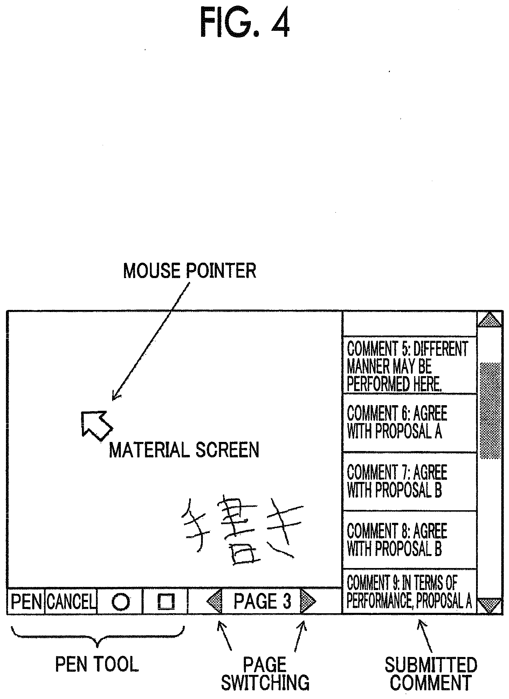

Fig. 4 illustrates an example of a display content displayed on a display screen of the presenter terminal 10a. For example, when a presenter operates the operation section 105 such as a mouse in the presenter terminal 10a to read a material stored in his or her storage section 103 (operation of displaying a new material on a material screen), the reception processing section 21 receives presenter operation information including information indicating a material ID and a page number from the presenter terminal 10a. In addition, for example, when a presenter operates a mouse on the presenter terminal 10a to input a mouse pointer to a material screen (see Fig. 4) displayed on the display section 106, the reception processing section 21 receives presenter operation information including information indicating a position (coordinates) of the mouse pointer, and an ID and a page number of a material which is input, from the presenter terminal 10a. In addition, for example, when a presenter operates a pen tool in the presenter terminal 10a to write a character or the like on the material screen (see Fig. 4) displayed on the display section 106, the reception processing section 21 receives presenter operation information including information indicating the position (coordinates) of the written character, an ID and a page number of a material which is written, and the like, from the presenter terminal 10a. Further, for example, when a presenter operates a mouse in the presenter terminal 10a to switch between pages of the material screen (see Fig. 4) displayed on the display section 106, the reception processing section 21 receives presenter operation information including information indicating an ID and a designated page number of a displayed material, from the presenter terminal 10a.

When the reception processing section 21 receives the presenter operation information, the notification section 23 notifies the participant terminals 10b, 10c, 10d, 10e, and 10f of the presenter operation information. When the participant terminals 10b, 10c, 10d, 10e, and 10f receive the presenter operation information, the participant terminals display a display screen according to the presenter operation information on the display section 106. For example, the participant terminal reads out material data corresponding to a material ID and a page number from its storage section 103 and displays the material data on the display section 106. In this manner, a display content on a display screen of a terminal 10 used by a presenter who operates a material shared in a conference is synchronously displayed on a display screen of each of plural terminals 10 used by plural participants attending the conference. A known technique may be used as a synchronous display method or an asynchronous display method in the electronic conference system 100. Meanwhile, a participant terminal executes a display control program to display a display content corresponding to presenter operation information on his or her display section. Each of the terminals 10 serves as a display control section.

### Communication channel Establishment Process

Next, a function for realizing a communication channel establishment process in the electronic conference system 100 will be described.

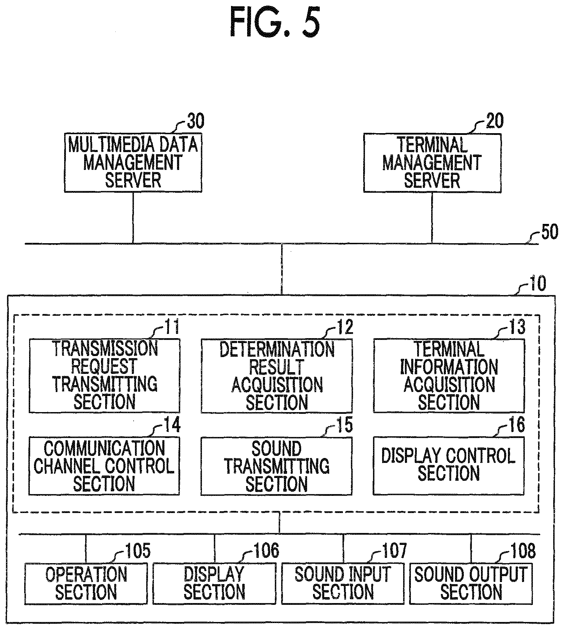

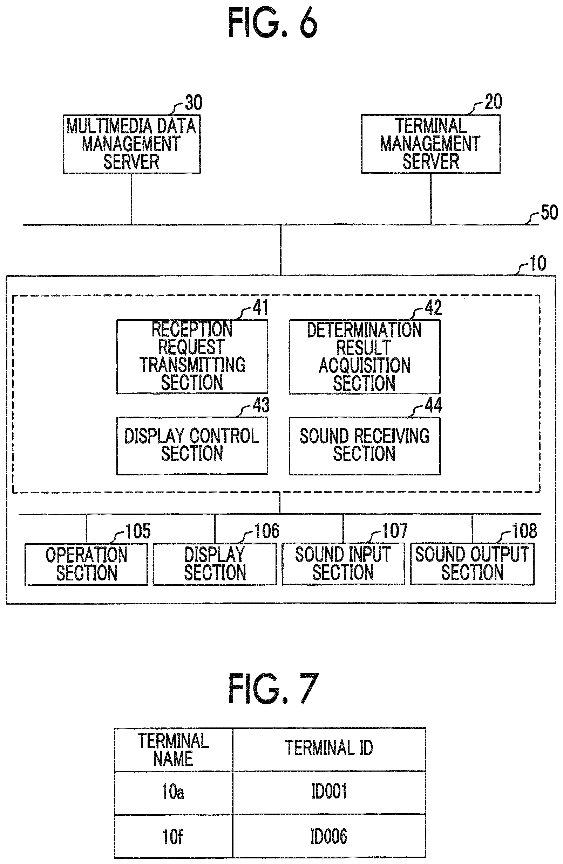

Figs. 5 and 6 are functional block diagrams illustrating a specific configuration of a terminal 10 in the electronic conference system 100. Hereinafter, for convenience of description, functional blocks corresponding to a transmission function are shown in the terminal 10 (hereinafter, also referred to as a transmission terminal) which is illustrated in Fig. 5, and functional blocks corresponding to a reception function are shown in the terminal 10 (hereinafter, also referred to as a reception terminal) which is illustrated in Fig. 6. Meanwhile, as described above, each of the terminals 10 includes both a transmission function (see Fig. 5) and a reception function (see Fig. 6). In addition, either a transmission terminal 10 or a reception terminal 10 may have the above-mentioned operation right, or both the terminals may not have the operation right.

As illustrated in Fig. 5, the transmission terminal 10 includes a transmission request transmitting section 11, a determination result acquisition section 12, a terminal information acquisition section 13, a communication channel control section 14, a sound transmitting section 15, and a display control section 16. As illustrated in Fig. 6, the reception terminal 10 includes a reception request transmitting section 41, a determination result acquisition section 42, a display control section 43, and a sound receiving section 44.

The above-mentioned components included in each of the terminals 10 are realized by the CPU 101 executing programs stored in the respective memories 102 (see Fig. 2). The programs may be installed in the terminal 10 from a computer-readable information storage medium such as a CD-ROM, a DVD-ROM, or a memory card or may be downloaded through the communication network 50 such as the Internet, or programs corresponding to predetermined components may be downloaded to the terminals 10 from the terminal management server 20 in which programs corresponding to the components are stored in advance.

Functions corresponding to the programs will be described. Hereinafter, a description will be given based on a flow of processing of the electronic conference system 100 according to the progress of a conference.

First, when a user desires to transmit his or her speaking (sound) to another terminal 10 in a conference, that is, requires to establish a communication channel for transmitting sound data between his or her terminal and another terminal, the user operates the operation section 105 of the terminal 10 to give an instruction to that effect. For example, in a conference, a user A selects a selection screen (for example, a check box or an electronic button) of "sound transmission" displayed on the display section 106 of the terminal 10 (see Fig. 5) which is used by the user A himself or herself, using a keyboard, a mouse, or the like. The transmission request transmitting section 11 of the terminal 10 transmits a received request of the user A (hereinafter, referred to as a transmission request) to the terminal management server 20. Meanwhile, for example, when the user A cancels the check box of "sound transmission" or when a predetermined condition is satisfied (described later), the transmission request transmitting section 11 transmits a request for the cancellation of transmission. For example, the transmission request transmitting section 11 transmits "+1" when transmitting a transmission request, and transmits "-1" when transmitting a cancellation request.

In addition, in a conference, when a user desires to receive another user's speaking (sound), the user operates the operation section 105 of the terminal 10 to give an instruction to that effect. For example, in a conference, a user B selects a selection screen (for example, a check box or an electronic button) of "sound reception" displayed on the display section 106 of the terminal 10 (see Fig. 6) which is used by the user B himself or herself, using a keyboard, a mouse, or the like. The reception request transmitting section 41 of the terminal 10 transmits a received request of the user B (hereinafter, referred to as a reception request) to the terminal management server 20. Meanwhile, for example, when the user B cancels the check box of "sound reception" or when a predetermined condition is satisfied (described later), the reception request transmitting section 41 transmits a request for the cancellation of reception. For example, the reception request transmitting section 41 transmits "+1" when transmitting a reception request, and transmits "-1" when transmitting a cancellation request.

Meanwhile, in each of the terminals 10, both selection screens of "sound transmission" and "sound reception" are displayed, and thus each user can individually select the selection screens. For example, in the terminal 10, the user A can also select both "sound transmission" and "sound reception".

The transmission request receiving section 24 of the terminal management server 20 (see Fig. 3) receives a transmission request which is transmitted from the transmission request transmitting section 11 of the terminal 10. For example, when transmission requests are transmitted from the respective terminals 10a and 10f, the transmission request receiving section 24 receives the transmission requests of the respective terminals 10a and 10f.

The reception request receiving section 25 of the terminal management server 20 receives a reception request which is transmitted from the reception request transmitting section 41 of the terminal 10. For example, when reception requests are transmitted from the respective terminals 10a to lOf, the reception request receiving section 25 receives the reception requests of the respective terminals 10a to lOf.

The determination processing section 26 of the terminal management server 20 determines whether to permit sound transmission in the terminal 10 having transmitted a transmission request received by the transmission request receiving section 24, based on the transmission request. Specifically, the determination processing section 26 compares the total number of terminals 10 having made the transmission request received by the transmission request receiving section 24 with the number of terminals which is set in advance, and determines whether the total number is equal to or less than the set number. The determination processing section 26 permits sound transmission in the terminal 10 having made the transmission request when the total number is equal to or less than the set number, and rejects sound transmission when the total number exceeds the set number. For example, when the terminals 10a and 10f make the transmission request in a case where the set number is set to "3", the total number (two) is equal to or less than the set number (three), and thus sound transmission in the terminals 10a and 10f is permitted.

Here, the determination processing section 26 calculates the total number of terminals 10 that are making a transmission request at the current point in time (at a point in time when a terminal to be determined has made a transmission request). For example, when the terminals 10a and 10f have already made a transmission request and the terminal 10b has newly made a transmission request, the total number at the current point in time is three. Accordingly, for example, when the set number is set to "2", the terminals 10a and 10f have already made a transmission request (sound transmission may be already performed) and the terminal 10b has newly made a transmission request, the total number (three) exceeds the set number (two), and thus the sound transmission of the terminal 10b having newly made a transmission request is rejected.

In this manner, sound transmission is permitted in order of making transmission requests until the number of terminals reaches the set number. In addition, when the number of terminals 10 permitted to transmit a sound reaches the set number, the sound transmission of another terminal 10 may be permitted in a case where sound transmission (communication channel) is cancelled in any one of the terminals 10.

The determination processing section 26 transmits the determination result (permission notification, rejection notification) to the terminal 10 having transmitted a transmission request.

In addition, the determination processing section 26 may determine whether to permit sound reception in the terminal 10 having transmitted a reception request received by the reception request receiving section 25, based on the reception request. For example, the determination processing section 26 may compare the total number of terminals 10 having made a reception request received by the reception request receiving section 25 with the number of terminals which is set in advance, and may determine whether the total number is equal to or less than the set number. In addition, the determination processing section 26 may permit to receive a sound with respect to all reception requests received by the reception request receiving section 25. The determination processing section 26 transmits the determination result (permission notification, rejection notification) to the terminal 10 having transmitted a reception request.

Further, when the total number of terminals 10 capable of making a transmission request reaches the set number, the determination processing section 26 may transmit a notification (message) indicating that the number of transmission terminals reaches a specified value (set number) and a transmission request cannot be made anymore, to all of the terminals 10 connected to the terminal management server 20. Similarly, when a transmission cancellation request is received and the number of terminals capable of making a transmission request falls below the set number, a notification indicating that a transmission request can be made may be transmitted to all of the terminals 10. In addition, a notification indicating the number of remaining terminals until the reaching of the set number may be transmitted. For example, the situation thereof is as follows. When the set number is two, the terminal 10a is notified of transmission permission when a transmission request is made from the terminal 10a, and "1" which is the number of remaining terminal devices until the reaching of the set number is transmitted to all of the terminals 10. Next, when a transmission request is made from the terminal 10f, the terminal 10f is notified of transmission permission, and "0" is transmitted to all of the terminals 10. Further, when a transmission cancellation request is made from the terminal 10a, "1" is transmitted to all of the terminals 10. Meanwhile, the determination processing section 26 may perform the same process as that mentioned above with respect to a reception request.

The terminal information generation section 27 of the terminal management server 20 generates transmission terminal information based on a transmission request received by the transmission request receiving section 24 and results of the determination made by the determination processing section 26. Specifically, when the total number is equal to or less than the set number, the terminal information generation section 27 generates a transmission terminal list in which pieces of terminal information of the terminal 10 permitted to transmit a sound are listed. For example, when transmission requests received from the terminals 10a and 10f are permitted, the terminal information generation section 27 generates a transmission terminal list in which pieces of terminal information such as names and pieces of identification information (terminal ID, IP address, and the like) of the terminals 10a and 10f are listed. Fig. 7 illustrates an example of a transmission terminal list. The terminal information generation section 27 updates the transmission terminal list whenever a received transmission request is permitted or a transmission request is cancelled. The generated transmission terminal list is stored in a terminal information DB 28.

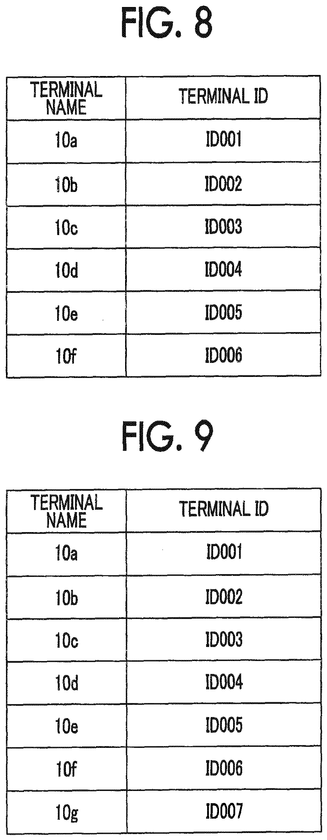

In addition, the terminal information generation section 27 generates reception terminal information based on a reception request received by the reception request receiving section 25. Specifically, the terminal information generation section 27 generates a reception terminal list in which pieces of terminal information of the terminals 10 permitting a reception request are listed. For example, when reception requests received from the terminals 10a to 10f are permitted, the terminal information generation section 27 generates a reception terminal list in which pieces of terminal information such as names and pieces of identification information (terminal ID, IP address, and the like) of the terminals 10a to 10f are listed. Fig. 8 illustrates an example of a reception terminal list. The terminal information generation section 27 updates the reception terminal list whenever a received reception request is permitted or a reception request is cancelled. Fig. 9 illustrates an updated reception terminal list in a case where a new reception request received from a network-connected terminal 10g (not shown) is permitted in the state in Fig. 8. The generated reception terminal list is stored in the terminal information DB 28.

In addition, the terminal information generation section 27 transmits the reception terminal list to the terminal 10 permitted to transmit a sound in the determination processing section 26. Further, even when the reception terminal list is updated (changed), the terminal information generation section 27 transmits the updated reception terminal list to the terminal 10 permitted to transmit a sound. For example, when the terminals 10a and 10f are permitted to transmit a sound, the terminal information generation section 27 transmits the reception terminal list (see Fig. 8) to the terminals 10a and 10f. In addition, even when the reception terminal list is updated, the terminal information generation section 27 transmits the updated reception terminal list to the terminals 10a and 10f. At this time, only the changed (added) reception terminal list may be transmitted.

The determination result acquisition section 12 (see Fig. 5) of the terminal 10 receives (or acquires) a result of the determination made in the determination processing section 26 of the terminal management server 20. For example, the determination result acquisition sections 12 of the respective terminals 10a and 10f acquire a permission notification for sound transmission from the terminal management server 20.

The terminal information acquisition section 13 (terminal information receiving section) (see Fig. 5) of the terminal 10 acquires (or receives) a reception terminal list from the terminal information generation section 27 of the terminal management server 20. For example, the terminal information acquisition sections 13 of the respective terminals 10a and 10f acquire the reception terminal list illustrated in Fig. 8 from the terminal management server 20.

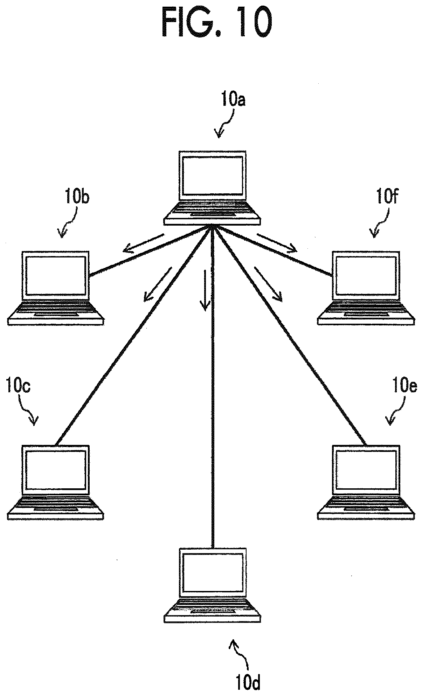

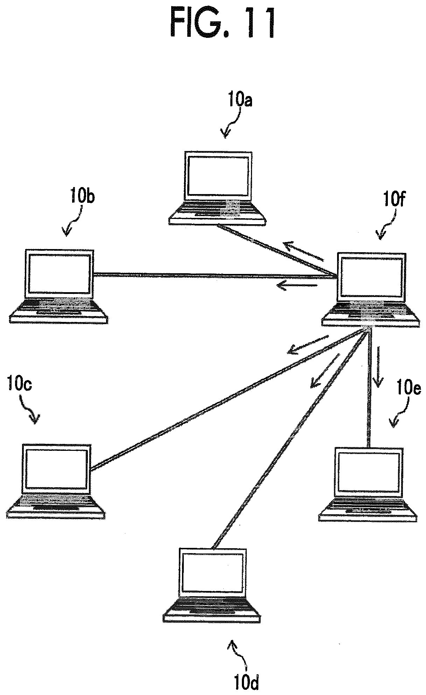

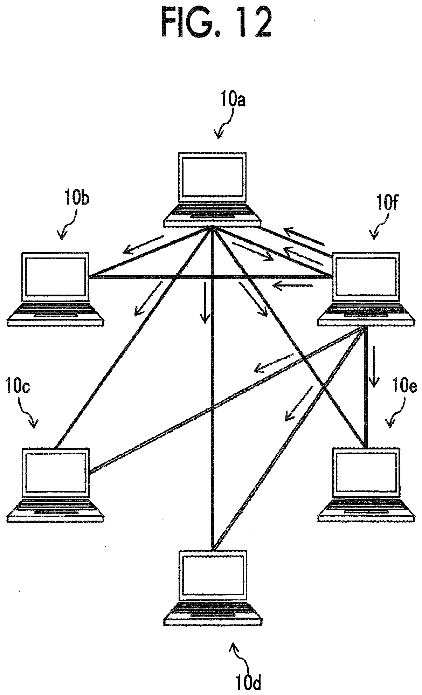

The communication channel control section 14 (control section) (see Fig. 5) of the terminal 10 establishes a communication channel for transmitting (transmitting and receiving) sound data between the communication channel control section and another terminal 10 based on the reception terminal list acquired by the terminal information acquisition section 13. The acquired reception terminal list is stored in the storage section 103. For example, the communication channel control section 14 of the terminal 10a establishes a communication channel between the terminal 10a and each of the terminals 10b, 10c, 10d, 10e, and 10f. Fig. 10 illustrates a network configuration showing a communication channel established between the terminal 10a and each of the terminals 10b, 10c, 10d, 10e, and 10f. Similarly, the communication channel control section 14 of the terminal 10f establishes a communication channel between the terminal 10f and each of the terminals 10a, 10b, 10c, 10d, and 10e. Fig. 11 illustrates a network configuration showing a communication channel established between the terminal 10f and each of the terminals 10a, 10b, 10c, 10d, and 10e. Fig. 12 illustrates a network configuration showing all of the communication channels established in the above-mentioned examples. In Figs. 10 to 12, a direction of an arrow indicates a direction in which sound data is transmitted. Although Figs. 10 to 12 illustrate a configuration in which sound data is transmitted and received without going through the terminal management server 20, the network configuration is not limited thereto, and a configuration in which sound data is transmitted and received using the terminal management server 20 as a repeater may be adopted.

In addition, for example, the establishment of a communication channel is performed on a terminal (reception terminal) receiving a sound by a terminal (transmission terminal) transmitting a sound, based on an IP address and a port number which are pieces of reception terminal information. In addition, for example, when a user A cancels a check box of "sound transmission" displayed on the display section 106 of the terminal 10a, the communication channel control section 14 cancels the established communication channel.

When the communication channel is established by the communication channel control section 14, the sound transmitting section 15 (see Fig. 5) of the terminal 10 transmits (distributes) sound data which is input to the sound input section 107 to each of the terminals 10 through the communication channel. For example, the sound transmitting section 15 transmits sound data corresponding to the speaking (sound) of the user A which is input to the sound input section 107 of the terminal 10a to each of the terminals 10b, 10c, 10d, 10e, and 10f through a communication channel (single line in Fig. 12), and transmits sound data corresponding to the speaking (sound) of a user F which is input to the sound input section 107 of the terminal 10f to each of the terminals 10a, 10b, 10c, 10d, and 10e through a communication channel (double line in Fig. 12). Thereby, the speaking (sound data) of the user A and the user F may be transmitted to another terminal 10, for example, at the same timing. Meanwhile, the sound transmitting section 15 may perform stream transmission (streaming) on each of the terminals 10, or may transmit a sound data file thereto. In addition, when both a transmission terminal and a reception terminal are incorporated with a web browser, a sound stream of the transmission terminal may be connected to the reception terminal using web real-time communication (web RTC).

In addition, the sound transmitting section 15 transmits (distributes) sound data, which is input to the sound input section 107, to the multimedia data management server 30. The multimedia data management server 30 stores the received sound data in the storage section 303. The multimedia data management server 30 will be described later in detail.

The display control section 16 (see Fig. 5) of the terminal 10 displays a display content according to the determination result acquired by the determination result acquisition section 12 on the display section 106. For example, when the determination result acquisition section 12 acquires a permission notification for sound transmission from the terminal management server 20, the display control section 16 displays a message indicating that sound transmission has been permitted, on the display section 106. In addition, when the determination result acquisition section 12 acquires a rejection notification for sound transmission from the terminal management server 20, the display control section 16 displays an error message indicating the rejection of sound transmission on the display section 106, and makes a change so that a selection screen (a check box or an electronic button) of "sound transmission" displayed on the display section 106 cannot be selected. For example, an electronic button for selecting sound transmission (transmission request) may be displayed in a grayed-out (inactivated) manner so as not to be capable of being selected (pressed down), or a note indicating that "now, transmission request is not available" may be displayed on the display section 106. In this manner, the display control section 16 may control a display content of the display section 106 so that a user cannot perform new sound transmission (transmission request).

The determination result acquisition section 42 (see Fig. 6) of the terminal 10 receives (or acquires) the determination result obtained by the determination processing section 26 of the terminal management server 20. For example, the determination result acquisition sections 42 of the respective terminals 10a to 10f acquire a permission notification for sound reception from the terminal management server 20.

When the permission notification is acquired by the determination result acquisition section 42, the display control section 43 (see Fig. 6) of the terminal 10 displays a message indicating that sound reception has been permitted, on the display section 106. In addition, when the determination result acquisition section 42 acquires a rejection notification for sound reception from the terminal management server 20, the display control section 43 displays an error message indicating the rejection of sound reception on the display section 106 and makes a change so that a selection screen (a check box or an electronic button) of "sound reception" displayed on the display section 106 cannot be selected.

The sound receiving section 44 (see Fig. 6) of the terminal 10 receives sound data which is transmitted through the communication channel. The sound output section 108 converts the received sound data to output a sound. For example, the sound receiving sections 44 of the respective terminals 10b, 10c, 10d, 10e, and 10f receive sound data corresponding to the speaking (sound) of a user A which is transmitted through the communication channels (single lines in Fig. 12) from the terminal 10a, and the sound output sections 108 output a sound. In addition, the sound receiving sections 44 of the respective terminals 10a, 10b, 10c, 10d, and 10e receive sound data corresponding to the speaking (sound) of a user F which is transmitted through the communication channels (double lines in Fig. 12) from the terminal 10f, and the sound output sections 108 output a sound. Thereby, for example, users B, C, D, and E of the respective terminals 10b, 10c, 10d, and 10e can listen to the speaking of the user A and the speaking of the user F at the same timing.

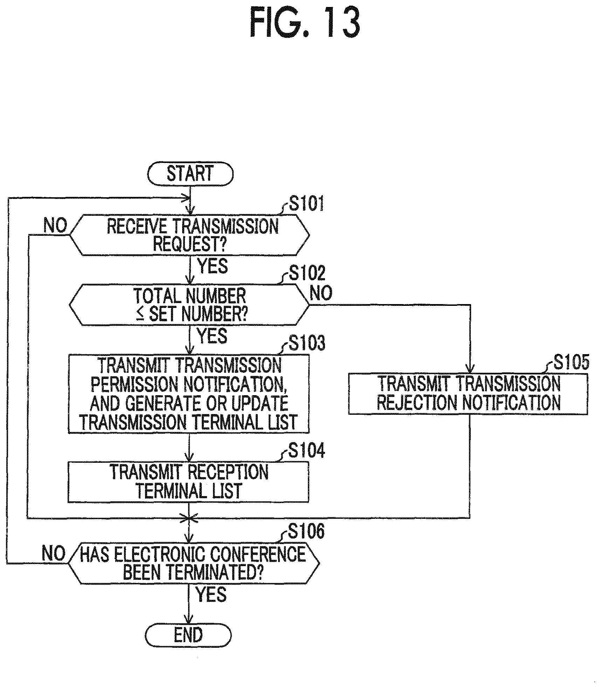

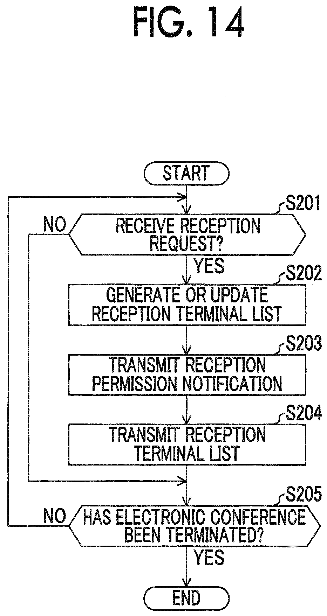

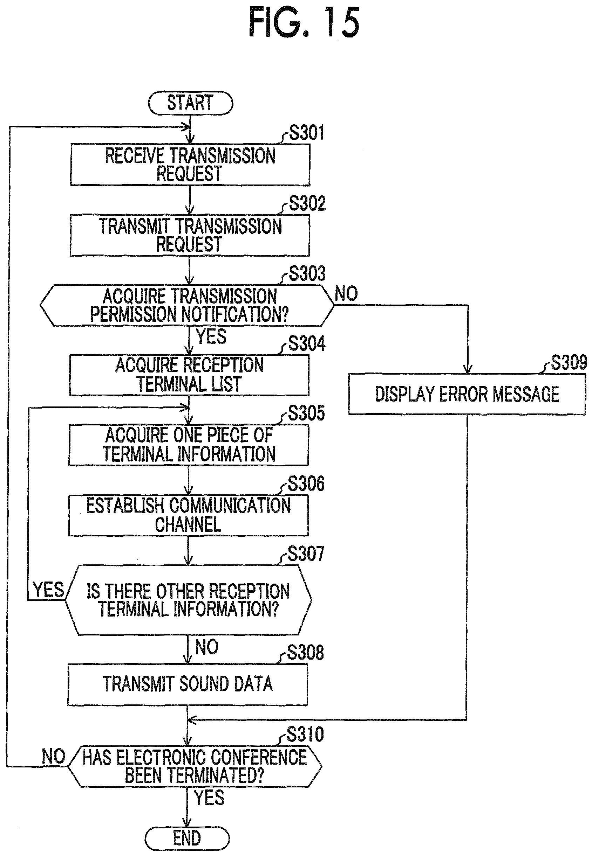

Next, a flow of a communication channel establishment process in the electronic conference system 100 will be described with reference to a flow chart. Fig. 13 is a flow chart in a case where the terminal management server 20 receives a transmission request from the terminal 10. This process is performed by the terminal management server 20 notifying plural terminals 10, network-connected to the terminal management server 20, of conference starting information, for example, when a conference is started. The same is true of processes of Figs. 14 and 15 to be described later.

First, when a transmission request is transmitted from the terminal 10, the transmission request receiving section 24 receives the transmission request (S101). Next, the determination processing section 26 compares the total number of terminals 10 having made a transmission request with the number of terminals which is set in advance, and determines whether the total number is equal to or less than the set number (S102).

When the total number is equal to or less than the set number, the determination processing section 26 transmits a permission notification for sound transmission to the terminal 10 having made a transmission request, and the terminal information generation section 27 generates or update a transmission terminal list (see Fig. 7) (S103). Subsequently, the terminal information generation section 27 transmits a reception terminal list in which pieces of information of terminals having made a reception request are listed, to the terminal 10 registered in the transmission terminal list (S104).

In the process of S102, when the total number exceeds the set number, the determination processing section 26 transmits a rejection notification for sound transmission to the terminal 10 having transmitted a transmission request (S105). The processes of S101 to S105 are repeated until a conference is terminated (S106).

Fig. 14 is a flow chart in a case where the terminal management server 20 has received a reception request from the terminal 10.

First, when a reception request is transmitted from the terminal 10, the reception request receiving section 25 receives the reception request (S201). Next, the terminal information generation section 27 generates or updates a reception terminal list (see Fig. 8) (S202). Next, the terminal information generation section 27 transmits a permission notification for sound reception to the terminal 10 registered in the reception terminal list (S203). Meanwhile, here, a case where sound reception is permitted with respect to all reception requests received by the reception request receiving section 25 is described, but the determination processing section 26 may permit sound reception only in a case of being equal to or less than the number which is set in advance, and may transmit a rejection notification for sound reception to the terminal 10 in a case of rejection. Next, the terminal information generation section 27 acquires a transmission terminal list, and transmits a reception terminal list to each of the terminals 10 registered in the transmission terminal list (S204). Meanwhile, when the reception terminal list is changed (updated), only a changed (added) reception terminal list may be transmitted. The processes of S201 to S204 are repeated until the conference is terminated (S205).

Fig. 15 is a flow chart of a process (communication channel establishment process) in the terminal 10 in a case where a user makes a transmission request in the terminal 10.

First, in a conference, the terminal 10 receives a transmission request from a user (S301). Next, the transmission request transmitting section 11 transmits the received transmission request to the terminal management server 20 (S302). When the terminal management server 20 receives the transmission request, the processes of S101 to S105 illustrated in Fig. 13 are performed.

Next, the determination result acquisition section 12 of the terminal 10 acquires a transmission permission notification or a transmission rejection notification from the terminal management server 20 (S303). When the transmission permission notification is acquired, the terminal information acquisition section 13 acquires a reception terminal list from the terminal management server 20 (S304).

Next, the communication channel control section 14 acquires a terminal information (terminal ID) of any one terminal 10 from the reception terminal list (S305). Next, the communication channel control section 14 establishes a communication channel for transmitting sound data to the terminal 10 corresponding to the acquired terminal information (S306). The communication channel control section 14 performs a process of establishing the communication channel on all of the terminals 10 registered in the reception terminal list (S307).

Next, the sound transmitting section 15 transmits sound data to the terminals 10 through the established communication channel (S308).

In the process of S303, when the determination result acquisition section 12 acquires the transmission rejection notification from the terminal management server 20, the display control section 16 of the terminal 10 displays an error message on the display section 106 (S309). The processes of S301 to S309 are repeated until the conference is terminated (S310).

As described above, the electronic conference system 100 according to the exemplary embodiment is configured to set an upper limit for the number of transmission terminals which are given a speaking right (transmitting a sound) and to dynamically change a terminal permitted to perform transmission in response to a user's instruction to thereby establish a communication channel between the terminal permitted to perform transmission and another terminal. Thereby, even when the number of terminals connected to each other through a network is large, high-quality data communication is realized between the terminals. In addition, each user can select a case where the user desires to transmit speaking (sound) or a case where the user desires to receive a sound in accordance with his or her intention, and a communication channel is dynamically changed and established between terminals on a network in response to the user's intention.

In addition, according to the electronic conference system 100, the communication of sound data is controlled independently of a sharing state (synchronization, asynchronization) of a material (display content). That is, it is possible to individually synchronously control a material and a sound between plural terminals. For this reason, for example, during a conference, a network including communication channels for transmitting and receiving sound data is established as illustrated in Fig. 12. When a user A of the terminal 10a is a presenter performing an operation relating to a display content, the user A can speak (for example, a description regarding details of a table) while performing the operation. Thereby, each of users B to F of other terminals 10b, 10c, 10d, 10e, and 10f can listen to the speaking (description) of the user A which is output from the sound output section 108 of his or her terminal while confirming a display screen, corresponding the operation details, of the terminal 10a through a display screen of his or her terminal.

In the above-described configuration, for example, the user A who is a presenter synchronously displays a material X, displayed on the display section 106 of the terminal 10a, on the display sections 106 of the respective terminals 10b to 10f of the users B to F who are participants and outputs a sound uttered by the user A from the terminals 10b to 10f. In addition, in the configuration, when the user A performs an operation, such as writing in the material X using a pen tool, picking up a submitted comment, switching between pages of the material X, and inputting and moving a mouse pointer, on the material X, contents corresponding to the operation are synchronously displayed on the display sections 106 of the respective terminals 10b to 10f.

The electronic conference system 100 according to the exemplary embodiment is configured to perform a multimedia data management process of recording and managing multimedia data such as a sound and a video in a conference, in addition to being configured to perform the "synchronous display process" and the "communication channel establishment process". Specifically, the electronic conference system 100 assigns (associates) event information (hereinafter, referred to as metadata) relating to an event occurring in a conference to (with) sound data in the conference. For example, in the conference, when a user A changes a material X to another material Y (displays a new material), information regarding the changed material Y and information regarding a changed time are associated with the sound data.

In the electronic conference system 100 according to the exemplary embodiment, the multimedia data management server 30 has a program for realizing each function illustrated in Fig. 3. In addition, when each of the terminals 10 is connected to the multimedia data management server 30 and is authenticated, for example, a multimedia data management program for managing multimedia data may be downloaded to each of the terminals 10.

Hereinafter, a function for realizing a multimedia data management process in the electronic conference system 100 will be described.

### Multimedia data Management Process

Fig. 3 illustrates a specific configuration of the multimedia data management server 30.

The multimedia data management server 30 includes an event detection section 31, a metadata type determination section 32 (determination section), a time information acquisition section 33, a metadata generation section 34 (generation section), and a metadata assignment section 35 (association section). These components are realized by the CPU 301 executing a program stored in the memory 302.

The storage section 303 includes a multimedia database (multimedia DB 36) and a metadata management database (metadata management DB 37). The multimedia DB 36 stores multimedia data such as a sound and a video in a conference. Here, sound data will be described as an example of multimedia data. For example, in a conference, pieces of sound data transmitted from the sound transmitting sections 15 of the respective terminals 10 are recorded in time series, and are stored as one piece of sound data at the same time as the termination of the conference. Meanwhile, time information is associated with the sound data. The time information may be information regarding an elapsed time from a point in time when the conference is started, or may be information regarding a real-time date and time when the conference is performed. The metadata management DB 37 stores various pieces of information regarding metadata.

The program may be installed in the terminal 10 from a computer-readable information storage medium such as a CD-ROM, a DVD-ROM, or a memory card, or may be downloaded through the communication network 50 such as the Internet. Alternatively, programs corresponding to predetermined components may be downloaded to the terminals 10 from the multimedia data management server 30 in which the programs corresponding to the components are stored in advance.

The event detection section 31 detects various types of events occurring in the electronic conference system 100. The events relate to actions that occur when the plural terminals 10 communicate with each other. For example, the events include an action such that a user operates through each of the terminals 10 during a conference ("user operates"), an action performed by the user in order for the user to participate in the conference ("enter"), an action performed by the user in order for the user to leave the conference ("exit"), and the like. In addition, the user's operation includes presenter's or participant's operation such as displaying a new material, writing in a material using a pen tool (handwriting tool) (inputting a character), picking up (selecting) a submitted comment (question or the like), switching between pages of a material, inputting and moving a mouse pointer, and totalizing a questionnaire, and an operation for changing a presenter, and the like.

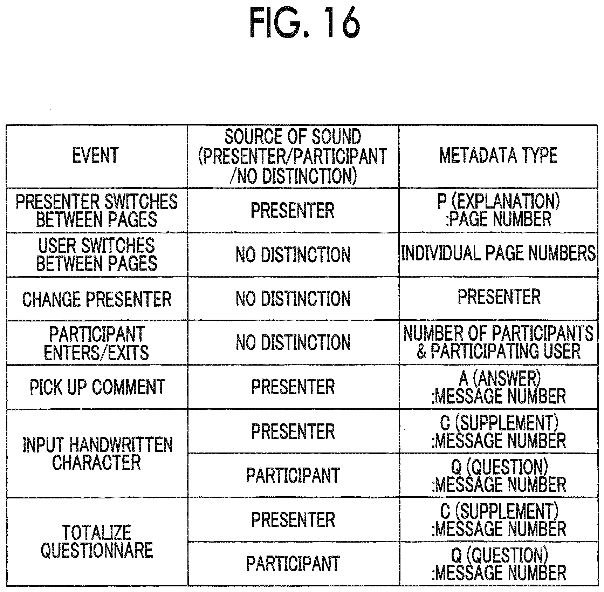

The metadata type determination section 32 determines a metadata type corresponding to an event detected by the event detection section 31. Here, as described above, the metadata is information (event information), associated with sound data, which is associated with an event occurring in a conference, and the metadata type is information (event information type) indicating the type (category) of metadata. The metadata type determination section 32 determines a metadata type corresponding to an event with reference to a metadata type determination table. Fig. 16 illustrates an example of the metadata type determination table. For example, when the event is that "presenter switches between pages", it can be determined that a presenter has begun to describe a switched page, and thus the metadata type determination section 32 determines the corresponding metadata type to be "P (explanation):page number". In addition, when the event is "picking up comment", a picked-up comment is a question from a participant, and it may be determined that a presenter gives an answer to this. Thereby, the metadata type determination section 32 determines that the corresponding metadata type to be "A (answer):message number". The metadata type determination table is set in advance by, for example, a manager.

The time information acquisition section 33 acquires a current time when an event has been detected in a conference (time when the event has occurred) (time information). The current time may be an elapsed time from a point in time when the conference has been started, or may be an actual date and time. Here, a description will be given using an elapsed time from a point in time when the conference has been started, as an example.

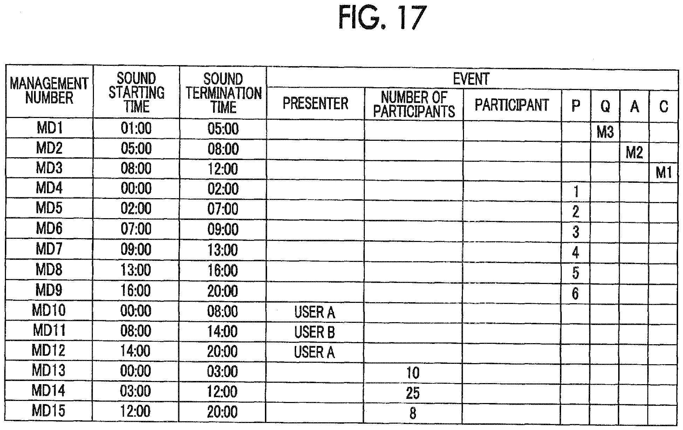

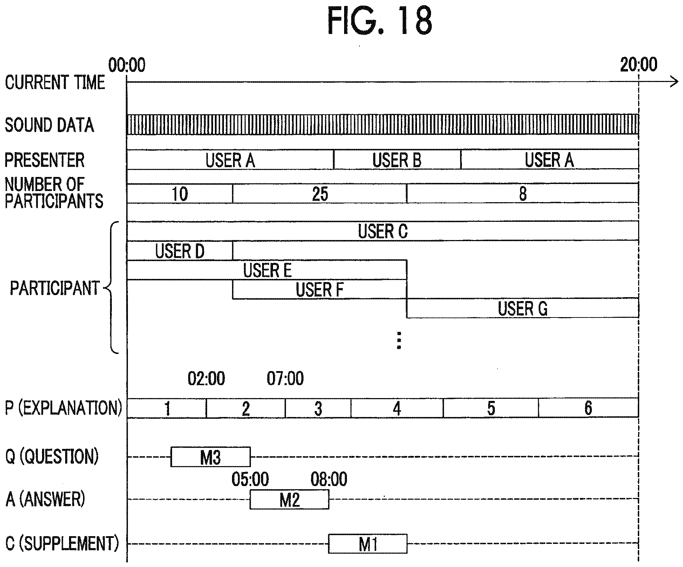

The metadata generation section 34 generates corresponding metadata based on a metadata type determined by the metadata type determination section 32 and time information acquired by the time information acquisition section 33. Specifically, the metadata generation section 34 generates metadata corresponding to an event by recording various pieces of information (metadata information) constituting metadata in a metadata management table. The metadata generation section 34 generates metadata by recording metadata information in the metadata management table whenever an event occurs during a conference. Fig. 17 illustrates an example of a metadata management table. Fig. 17 illustrates a metadata management table at a point in time when a conference is terminated. A management number "MD", sound starting and termination times (time information), and details of an event (event information) are recorded for each event. Each of the sound starting time, the sound termination time, and the event information serves as metadata information. In addition, time information and event information which correspond to one management number serve as one piece of metadata. The metadata management table illustrated in Fig. 17 corresponds to details of a series of events occurring during one conference illustrated in Fig. 18.

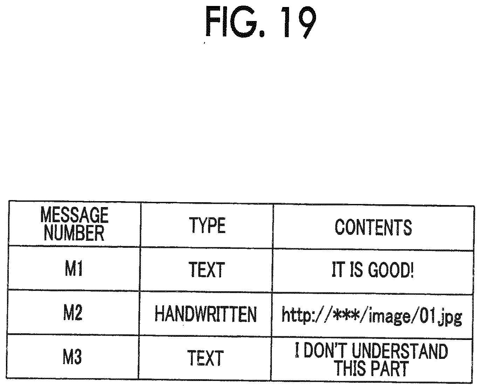

In Fig. 18, "sound data" is data which is recorded during a conference and is stored in the multimedia DB 36, and is indicated here to have a capacity of 20 minutes in total. Here, a "presenter" indicates a user making a presentation in the conference, and it is indicated that a presenter has changed in the order of users A, B, and A in time series. Here, "number of participants" indicates the number of users having participated in the conference, and it is indicated that the number of participants has increased and decreased in the order of ten, twenty-five, and eight in time series. Here, "participant" indicates a user who participates in the conference. For example, it is indicated that a user C participates in the conference from beginning to end, users D and E exit from the conference in the middle of the conference, and users F and G have participated in (entered) the conference from the middle of the conference. Here, "P (explanation)" indicates a page number of a material which is used (displayed) in the conference, and it is indicated that page numbers are switched in order from page 1 to page 6 in time series. Here "Q (question)" indicates a question (message number "M3") which is submitted by a user (participant), and indicates a range from a time when the participant inputs handwritten characters to a time when the participant finishes inputting the handwritten characters. Here "A (answer)" indicates a presenter's answer (message number "M2") to the question, and indicates a range from a time when the presenter picks up (selects) the question to a time when the presenter closes the question. Here, "C (supplement)" indicates a comment (message number "M1") which is written by a user, and indicates a range from a time when the presenter inputs handwritten characters to a time when the presenter finishes inputting the handwritten characters. Meanwhile, details of the question, the answer, and the supplement are stored in a message management table, and are managed with respective message numbers attached thereto. Fig. 19 illustrates an example of a message management table. The message management table is stored in the storage section 303.

As illustrated in Fig. 17, for example, a management number "MD1" indicates that a question ("Q") of a message number "M3" has been asked in a period between "01:00" and "05:00" during a conference, a management number "MD2" indicates an answer ("A") of a message number "M2" has been given in a period between "05:00" and "08:00" during the conference, and a management number "MD3" indicates that a comment ("C") of a message number "M1" has been given in a period between "08:00" and "12:00" during the conference. In addition, a management number "MD4" indicates that page 1 of a material has been displayed and explained ("P") in a period between "00:00" and "02:00" during the conference, and a management number "MD5" indicates that page 2 of the material has been displayed and explained ("P") in a period between "02:00" and "07:00" during the conference. In addition, a management number "MD10" indicates that a user A makes a presentation in a period between "00:00" and "08:00" during the conference, and a management number "MD11" indicates that a user B makes a presentation in a period between "08:00" and "14:00" during the conference.

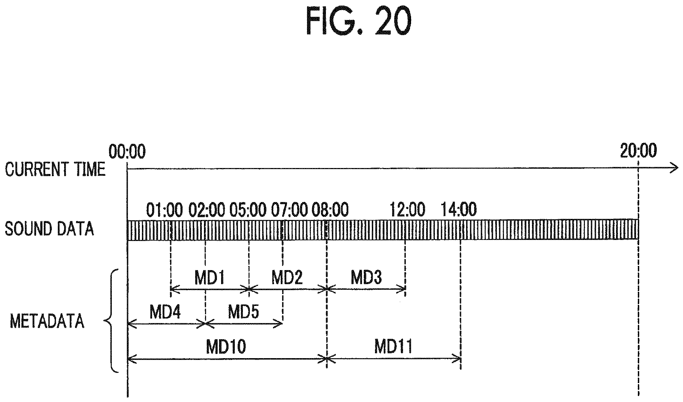

The metadata assignment section 35 assigns metadata generated by the metadata generation section 34 to sound data stored in a multimedia DB 36. Specifically, since time information is associated with the sound data, the metadata assignment section 35 assigns metadata to the position of sound data conforming to time information of the metadata. Fig. 20 schematically illustrates the sound data and the metadata assigned to the sound data. Here, as an example, pieces of metadata "MD1", "MD2", "MD3", "MD4", "MD5", "MD10", and "MD11" are shown.

Meanwhile, the metadata assignment section 35 may divide sound data stored in the multimedia DB 36 each piece of metadata generated by the metadata generation section 34 and may assign metadata to each of the pieces of sound data obtained by division. In this case, sound data files corresponding to the number of pieces of metadata are generated. In addition, the metadata assignment section 35 may associate the generated metadata with sound data and may store the associated data in a folder different from that of the sound data.

According to the above-mentioned configuration, in sound data stored, sound data corresponding to an event is easily searched for, and thus it is possible to efficiently reproduce only a desired sound. For example, when sound data is reproduced, it is possible to rapidly reproduce only a portion of sound corresponding to an explanation for page 2 of a material. In addition, for example, when a presenter is changed from A to B, it is possible to rapidly reproduce only sound in a portion presented by B.

A configuration for reproducing a sound is not particularly limited. For example, the reception processing section 21 of the terminal management server 20 may receive a request for the reproduction of sound data corresponding to an event from a user, and may transmit the sound data corresponding to the event to the user's terminal to reproduce the sound data. The reception processing section 21 functions as a receiving section and a reproduction section.

For example, when a screen corresponding to a metadata management table is displayed and a user selects desired event details on the display screen, the reception processing section 21 of the terminal management server 20 may be configured to receive the event selected by the user and to transmit sound data associated with the event to the user's terminal to reproduce the sound data.

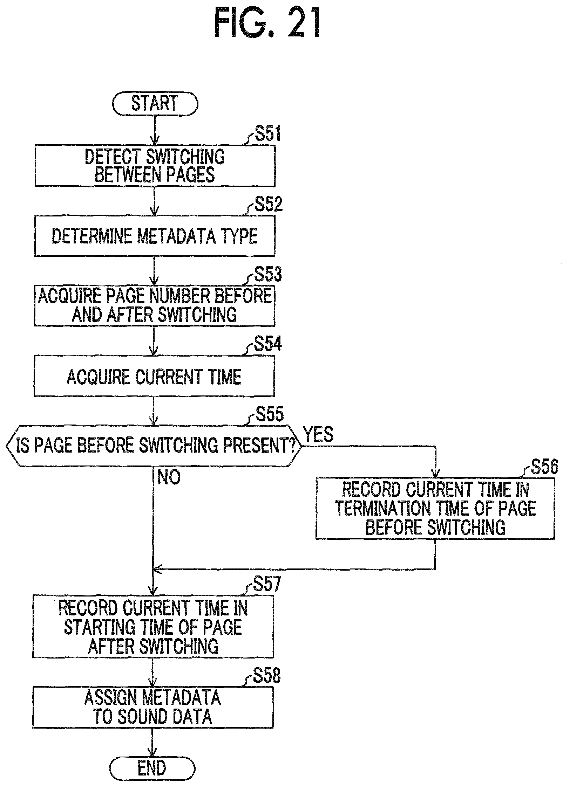

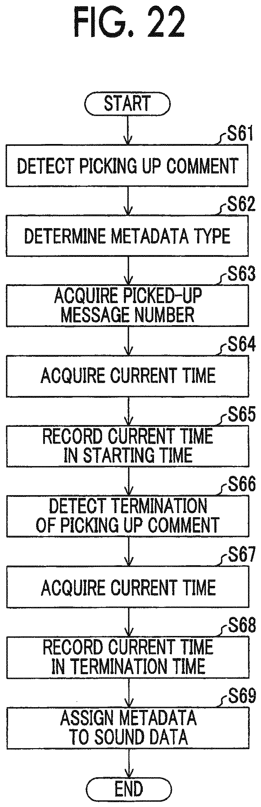

Here, a flow of a multimedia data management process, that is, a metadata generation and assignment process (associating process) will be described with reference to flow charts of Figs. 21 and 22. Fig. 21 illustrates a flow of a process in a case where a presenter A switches between pages of a material from page 1 to page 2 during a conference, and Fig. 22 illustrates a flow of a process in a case where the presenter A picks up a comment submitted by a participant during a conference.

In the example illustrated in Fig. 21, first, the event detection section 31 detects an event that the presenter A switches between pages of a material (S51). Next, the metadata type determination section 32 determines a metadata type corresponding to the event with reference to a metadata type determination table (Fig. 16) (S52). Here, as illustrated in Fig. 16, "P (explanation):page number" is determined as a metadata type. Next, the metadata generation section 34 acquires page numbers before and after switching (S53). Here, "1" and "2" are acquired as the page numbers.

Next, the time information acquisition section 33 acquires a current time (time information), that is, a time when an event has been detected (time when the event has occurred) (S54). Here, the time information acquisition section 33 acquires a time when the presenter A switches between pages of a material from page 1 to page 2. For example, a current time "02:00" is acquired (see Fig. 18). Meanwhile, in the present example, a current time is an elapsed time since a time when a conference is started ("00 (minutes):00 (seconds)"), but is not limited thereto, and may be an actual date and time.

Next, the metadata generation section 34 determines whether a displayed page before switching is present (S55). For example, when a desired page of a material is first displayed during a conference, there is no page having been displayed before switching. Here, since the page is switched from page 1 to page 2, a displayed page (page 1) before switching is present.

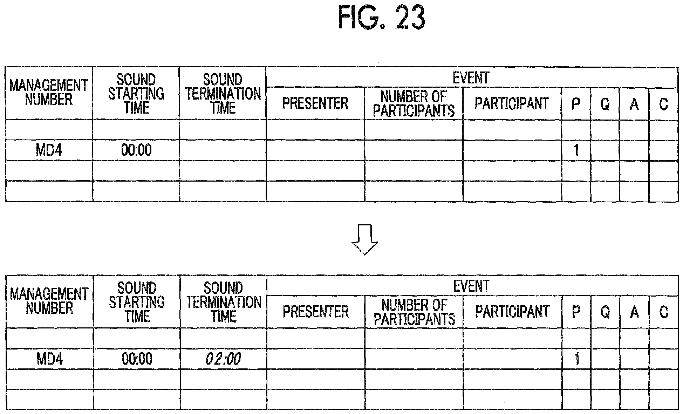

When a displayed page before switching is present (YES in S55), the metadata generation section 34 records the current time ("02:00") acquired by the time information acquisition section 33 in a termination time of the displayed page (page 1) before switching in the metadata management table (see Fig. 23) (S56).

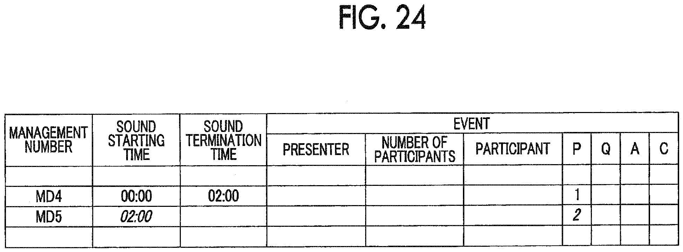

Next, the metadata generation section 34 records details of an event of a page (page 2) after switching, and records the current time ("02:00") acquired by the time information acquisition section 33 in a starting time of the page (page 2) after switching (see Fig. 24) (S57).

When a displayed page before switching is not present (NO in S55), the flow proceeds to the process of S57.

By the above-mentioned process, metadata (management number "MD4") for pieces of sound data from a time "00:00" to a time "02:00" among all pieces of sound data is generated. Meanwhile, metadata of the management number "MD5" is generated when the presenter A switches between the pages from page 2 to page 3 (see a time "07:00" in Fig. 18) (see Fig. 17). The pieces of metadata generated in this manner include information indicating a time when an event has occurred (time information) and information indicating details of the event.

Finally, the metadata assignment section 35 assigns the metadata (management number "MD4") generated by the metadata generation section 34 to a predetermined position of sound data stored in the multimedia DB 36 (see Fig. 20) (S58).

Now, a metadata generation and assignment process of the example illustrated in Fig. 22 will be described.

First, the event detection section 31 detects an event that the presenter A picks up a comment (S61). Next, the metadata type determination section 32 determines a metadata type corresponding to the event with reference to a metadata type determination table (S62). Here, as illustrated in Fig. 16, "A (answer):message number " is determined as the metadata type. Next, the metadata generation section 34 acquires a picked-up message number (S63). Here, "M2" is acquired as the message number.

Next, the time information acquisition section 33 acquires a current time, that is, a time when an event has been detected (time when the event has occurred) (S64). Here, the time information acquisition section 33 acquires a time when the presenter A has picked up a comment. For example, a current time "05:00" is acquired (see Fig. 18).

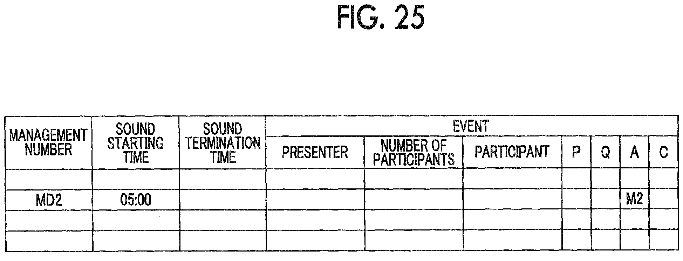

Next, the metadata generation section 34 records details of an event and records the current time ("05:00") acquired by the time information acquisition section 33 in a starting time corresponding to the event (see Fig. 25) (S65).

Next, the event detection section 31 detects an event that the presenter A terminates picking up of the comment (S66). Next, the time information acquisition section 33 acquires a current time, that is, a time when an event is detected (S67). Here, the time information acquisition section 33 acquires a time when picking up is terminated (time when picking up is closed). For example, a current time "08:00" is acquired (see Fig. 18).

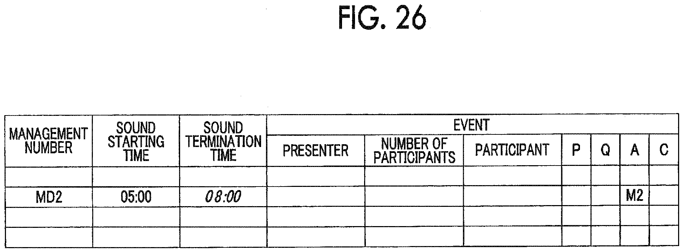

Next, the metadata generation section 34 records the current time ("08:00") acquired by the time information acquisition section 33 in a termination time (see Fig. 26) (S68).

By the above-mentioned process, metadata (management number "MD2") for pieces of sound data from a time "05:00" to a time "08:00" among all pieces of sound data is generated.

Finally, the metadata assignment section 35 assigns the metadata (management number "MD2") generated by the metadata generation section 34 to a predetermined position of sound data stored in the multimedia DB 36 (see Fig. 20) (S69).

### Modification Example 1

A configuration for transmitting and receiving a sound in the electronic conference system 100 is not limited to the above-mentioned configuration, and various configurations may be adopted. Hereinafter, an electronic conference system 100 according to Modification Example 1 will be described focusing on differences from the above-mentioned configuration. In the following electronic conference system 100 according to Modification Example 1, components having functions in common with those in the above-mentioned electronic conference system 100 will not be described.

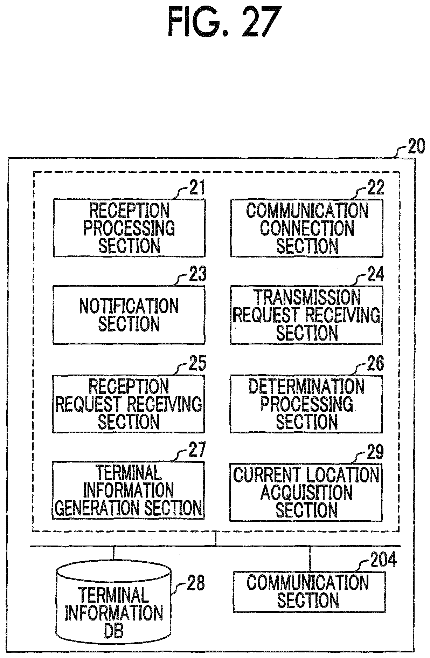

In the electronic conference system 100 according to Modification Example 1, a terminal management server 20 may further include a current location acquisition section 29 that acquires current locations of respective terminals 10. Fig. 27 is a functional block diagram illustrating a specific configuration of the terminal management server 20 according to Modification Example 1.

For example, the current location acquisition section 29 receives a detection value of a position detection section (not shown) (for example, a GPS) which is provided in each of the terminals 10 to acquire a current location (location or the like) of each of the terminals 10. In addition, the current location acquisition section 29 may set positional information such as an IP address and a subnet of a network in advance, and may acquire the current location of each of the terminals 10 by acquiring an IP address of each of the terminals 10.

A determination processing section 26 determines the permission or rejection of sound reception in a terminal 10 having transmitted a reception request received by a reception request receiving section 25, based on the received reception request and the current locations of the respective terminals 10 which are acquired by the current location acquisition section 29.

A terminal information generation section 27 generates reception terminal information based on the reception request received by the reception request receiving section 25 and a result of the determination made by the determination processing section 26. Specifically, the terminal information generation section 27 generates a reception terminal list in which pieces of information of terminals 10 permitted by the determination processing section 26 among the terminals 10 having made a reception request are listed. The terminal information generation section 27 transmits the reception terminal list to the terminal 10 permitted to transmit a sound in the determination processing section 26.

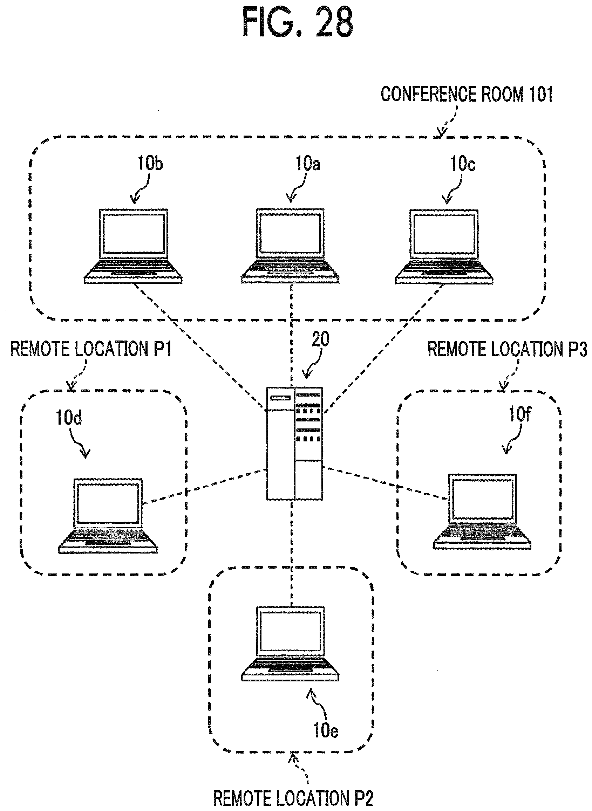

Hereinafter, a description will be given using a specific example. Fig. 28 illustrates a network configuration in a case where terminals 10a, 10b, and 10c are provided in the same conference room 101, a terminal 10d is provided at a remote location P1 from the conference room 101, a terminal 10e is provided at a remote location P2 from the conference room 101, and a terminal 10f is provided at a remote location P3 from the conference room 101.

In the network configuration of Fig. 28, it is assumed that the terminals 10a and 10f have transmitted a transmission request and the terminals 10a to 10f have transmitted a reception request. Since the total number of terminals (two) having transmitted a transmission request is equal to or less than the set number of terminals (three), the terminals 10a and 10f are permitted to transmit a sound.

The current location acquisition section 29 acquires the current location from each of the terminals 10a to 10f. That is, the current location acquisition section 29 acquires the "conference room 101" as the current location of each of the terminals 10a, 10b, and 10c, acquires the "remote location P1" as the current location of the terminal 10d, acquires the "remote location P2" as the current location of the terminal 10e, and acquires the "remote location P3" as the current location of the terminal 10f.

The determination processing section 26 determines whether the current locations of the respective terminals 10 are the same location or a location (predetermined location) within a range which is set in advance. When the plural terminals 10 are present at the predetermined location, sound reception is permitted for one terminal 10 of the plural terminals 10, and sound reception is rejected for the other terminals 10. In the network configuration of Fig. 28, sound reception is permitted for the terminal 10a among the terminals 10a, 10b, and 10c that are present at a predetermined location (conference room 101), and sound reception is rejected for the terminals 10b and 10c. The determination processing section 26 transmits a determination result (permission notification, rejection notification) to a terminal device having transmitted a reception request.

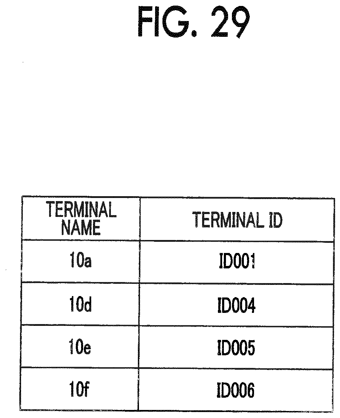

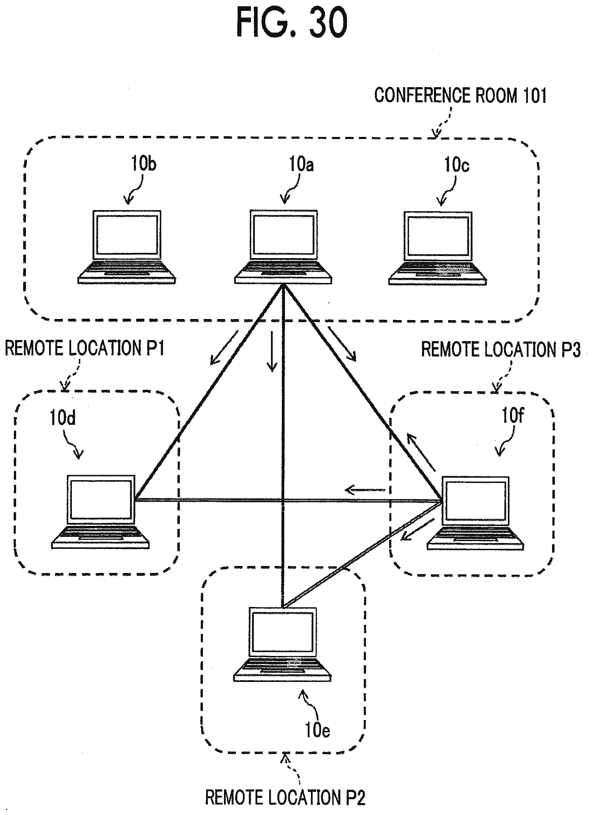

The terminal information generation section 27 generates a reception terminal list illustrated in Fig. 29 based on the determination result, and transmits the generated reception terminal list to the terminals 10a and 10f. The terminals 10a and 10f establish a communication channel based on the acquired reception terminal list. Fig. 30 illustrates a network configuration showing communication channels established in the electronic conference system 100 according to Modification Example 1.

Meanwhile, when plural terminals 10 are present at a predetermined location and two or more terminals 10 among the plural terminals have made a transmission request, the determination processing section 26 may permit sound transmission for one terminal 10 of the plural terminals 10 having made a transmission request and may reject sound transmission for the other terminals 10. For example, when the terminals 10a, 10b, and 10c that are present in the conference room 101 have made a transmission request, the sound transmission of the terminal 10a is permitted, and the sound transmission of the terminals 10b and 10c is rejected. The terminal information generation section 27 transmits a reception terminal list to the terminal 10a permitted to transmit a sound, and the terminal 10a establishes a communication channel based on the acquired reception terminal list.

In a conference having the above-mentioned network configuration, plural users (for example, users B and C) of the plural terminals 10 that are present in the same conference room can directly hear what one user (for example, a user A) among the users speaks, and can hear what other users (for example, users D, E, and F) who are present at remote locations speak by any one (for example, the terminal 10a) of the plural terminals 10 receiving and outputting what the other users speak. Thereby, according to the electronic conference system 100 of Modification Example 1, it is possible to reduce the number of communication channels required.

### Modification Example 2

In an electronic conference system 100 according to Modification Example 2, the number of terminal devices which is set may be dynamically changed. Specifically, the number of terminal devices may be set in accordance with the total number of terminals 10 connected to each other through a communication network 50. For example, a configuration may be adopted in which as the number of terminals 10 increases, the set number decreases. This configuration is suitable for, for example, an electronic conference such as a seminar in which a speaker (presenter) is determined. In addition, the set number may be calculated and set in accordance with a ratio to the total number of terminals 10 connected to each other through a network. Further, the set number may be set in accordance with the number of terminals 10 having made a reception request.

### Modification Example 3

In an electronic conference system 100 according to Modification Example 3, when a time for which sound data is not transmitted from a terminal 10 permitted to transmit a sound after the establishment of a communication channel reaches a time which is set in advance, a communication channel control section 14 (see Fig. 5) may cancel the communication channel corresponding to the terminal 10. For example, when a user A permitted to transmit a sound has not spoken for a fixed period of time, the communication channel control section 14 forcibly cancels a communication channel established in a terminal 10a of the user A. In addition, in the above-mentioned configuration, a user using a transmission terminal may be captured by a camera, and the presence or absence of the user's speaking and the duration of a speechless state may be measured by analyzing a captured image. The camera may be built into the terminal 10, or may be installed outside (for example, a conference room).

### Modification Example 4

In the exemplary embodiment, as illustrated in Fig. 15, when a transmission rejection notification is acquired, the display control section 16 of the terminal 10 displays an error message on the display section 106, but a configuration in a case where sound transmission is rejected is not limited thereto.

For example, in an electronic conference system 100 according to Modification Example 4, when the total number of transmission terminals has reached the set number at a point in time when terminals 10 are connected to a terminal management server 20, control may be performed such that a check box cannot be checked. In addition, the control of a check box may be performed by acquiring information from the terminal management server 20 in accordance with an increase and decrease in the total number of transmission terminals. The total number of transmission terminals may be acquired by performing polling with respect to the terminal management server 20. However, preferably, a connected state may be set using a web socket or the like, and notice may be given to each terminal from the terminal management server 20 side.

Meanwhile, the electronic conference system 100 may have the following configuration.

The electronic conference system 100 is configured to restrict the number of people (number of transmission terminals) capable of speaking at the same time because the number of people (speaker terminals) who speak at the same time is limited at a certain moment in spite of a large number of terminals being connected to each other and to dynamically change an establishment state of a communication channel while switching between transmission terminals. Thereby, it is possible to transmit and receive sound data between a large number of terminals in a pseudo manner.

In addition, the electronic conference system 100 is configured to be able to select sound transmission or sound reception in each of the terminals and to notify the terminal management server 20 of a change in the state of sound transmission or sound reception in each of the terminals.

In addition, the terminal management server 20 notifies a terminal in which sound transmission is selected of a list of terminals in which sound reception is selected. Meanwhile, at this time, notice of information regarding a terminal that has not changed in a state so far may not be given. A transmission terminal having been given notice makes a call to a reception terminal device (makes a connection request) so as to receive its own stream information only with respect to a reception terminal which is newly registered.

In addition, the electronic conference system 100 has a configuration in which the terminal management server 20 manages the total number of terminals capable of simultaneously performing transmission and a transmission request cannot be selected in a terminal when the total number reaches an upper limit (set number).

In addition, the electronic conference system 100 may be configured such that a transmission terminal includes two types of transmission terminals of a normal transmission terminal and a temporary transmission terminal, and the temporary transmission terminal can perform transmission only for a fixed period of time and sound transmission is cancelled (check box for a transmission request is cancelled) after the fixed period of time elapses. In addition, the temporary transmission terminal may be configured such that transmission can be performed only while a user pushes a sound transmission button. In addition, the temporary transmission terminal may be configured such that a transmission request is cancelled when a speechless state is continued for a fixed period of time.

In addition, the electronic conference system 100 may be configured such that a user desiring to speak makes a transmission request in a terminal and a nominated user in a specific terminal (master terminal) is given a right to speak (permitted as a transmission terminal).

In addition, the electronic conference system 100 may be configured not to include the communication channel establishment process. That is, the electronic conference system 100 may include a sound communication process of the related art.

The exemplary embodiment and the modification examples of the above-mentioned electronic conference systems are examples, and may also be combined with each other.

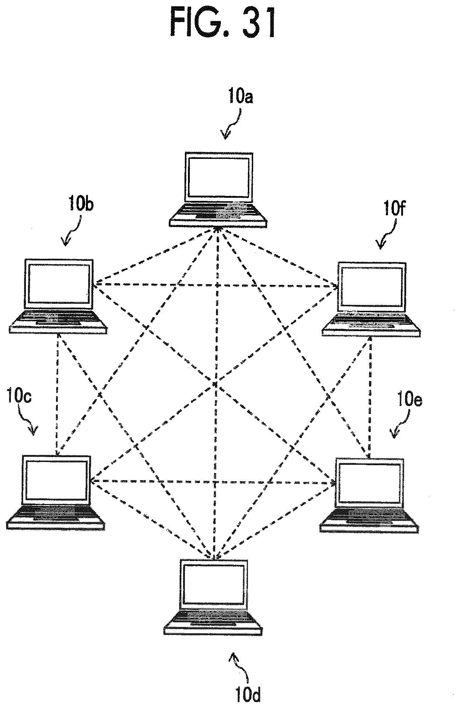

In addition, a network configuration of each electronic conference system may be a configuration in which a terminal management server 20 is not provided (Fig. 31). The configuration illustrated in Fig. 31 is realized by programs, corresponding to components included in the electronic conference system, being downloaded to the terminals 10a to 10f. Specifically, each of electronic conference systems is realized by a CPU of each terminal executing a program stored in a memory of each of the terminals 10a to 10f. Meanwhile, the downloaded program may be constituted by, for example, JavaScript (registered trademark). In addition, a terminal 10 having the program downloaded thereto or recorded thereon functions as an information processing apparatus. In addition, a computer having the program downloaded thereto may be a terminal 10 or may be a terminal management server 20.

The electronic conference system 100 is not limited to the transmission and reception of sound data. That is, the electronic conference system 100 may be used for the transmission and reception of multimedia data including at least one of sound data and video data (movie data). In addition, each electronic conference system may be used in various types of electronic conferences such as a television conference and a telephone conference. Meanwhile, in the television conference, communication of videos captured by cameras built into respective terminals is bidirectionally performed between the terminals through the communication channel. In addition, each electronic conference system may also be used in a remote conference in which conference participants are located at positions distant from each other.

In the above description, an electronic conference system has been described as an example of an information processing system. However, the information processing system is not limited to the electronic conference system, and includes various systems that share multimedia data between terminals connected to each other through a network.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. The scope of the invention is defined by the following claims.

## Claims

1. An information processing apparatus (30, 20) that transmits and receives multimedia data including at least one of sound data and video data between a plurality of terminals (10) connected to each other through a network (50) to communicate with each other in a conference in an electronic conference system (100), the information processing apparatus (30) comprising:
a detection section (31) that detects an event, which is an operation that a user performs on one of the terminals, when the plurality of terminals communicate with each other in the conference;
a metadata type determination section (32) that determines a metadata type corresponding to an event detected by the detection section (31) and being associated with a source of multimedia data;
an association section (35) that associates event information, by recording it as metadata, relating to the event with the multimedia data based on time information included in the multimedia data, a time when the detection section detects the event and the metadata type;
a transmission request receiving section (24) for receiving transmission requests for transmitting multimedia data from the terminals (10); and
a determination processing section (26) for determining whether to permit multimedia transmission by a terminal making a transmission request, wherein the determination processing section (26) permits multimedia transmission by comparing a total number of terminals (10) having made a transmission request with a set number of terminals and dynamically changes a terminal permitted to perform multimedia transmission in accordance with transmission requests, the set number of terminals and cancellation of multimedia transmission in a terminal, and transmitting a determination result to the terminal making the transmission request.

2. The information processing apparatus (30, 20) according to claim 1, further comprising:
a receiving section (304) that receives operation information indicating details of an operation that a user performs on one of the terminals (10); wherein
the metadata type determination section (32) refers to a storage section (303) that stores the operation information and a metadata type indicating a type of the event information corresponding to the operation information in association with each other, to determine the metadata type corresponding to the operation information received by the receiving section,
wherein the association section (35) associates the event information corresponding to the metadata type with the multimedia data.

3. The information processing apparatus (30, 20) according to claim 2, wherein
the storage section (303) stores the operation information, user information for identifying a user having performed the operation and the metadata type corresponding to the operation information in association with each other, and
the determination section (32) determines the metadata type corresponding to the operation information received by the receiving section and the user information.

4. The information processing apparatus (30, 20) according to claim 1,
wherein when the detection section (31) detects as the event a user's operation to switch between pages of a material used in a conference, the association section associates the event information including
time information indicating a time when the user switches between the pages,
a page number before the user switches between the pages, and
user information of the user who switches between the pages,
with the multimedia data.

5. The information processing apparatus (30, 20) according to claim 1,
wherein when the detection section (31) detects a user's operation to select a submitted message as the event, the association section (35) associates the event information including
time information indicating a time when the user selected the message,
details of the selected message, and
user information of the user who selects the message
with the multimedia data.

6. The information processing apparatus (30, 20) according to claim 1,
wherein when the detection section (31) detects an operation to change a user who makes a presentation in a conference as the event, the association section (35) associates the event information including
time information indicating a time when the user who makes the presentation is changed, and
user information of the user who makes the presentation before the change
with the multimedia data.

7. The information processing apparatus (30, 20) according to claim 1, further comprising:
a receiving section (304) that receives from a user a request for reproduction of the multimedia data corresponding to the event; and
a reproduction section that reproduces the multimedia data,
wherein the reproduction section reproduces a portion, corresponding to the event selected by the user, of the multimedia data.

8. The information processing apparatus (30, 20) according to claim 1, wherein the detection section (31) detects the event occurring when the terminals (10) are communicating the multimedia data with each other.

9. The information processing apparatus (30, 20) according to claim 1, wherein the event detected by the detection section (31) is one selected from the group consisting of:
a presenter's operation to switch between pages of a material used in the conference, the presenter making a presentation in the conference,
a participant's operation to switch between pages of the material, the participant being different from the presenter,
an operation to change the presenter to another person,
an operation to enter the conference,
an operation to exit the conference,
an operation to select a comment submitted during the conference,
an operation to input a handwritten character, and
an operation to totalize a questionnaire.

10. The information processing apparatus (30, 20) according to claim 1, wherein the event information includes
event identification information,
sound time information indicating a sound starting time and a sound termination time, and
information indicating details of the event.

11. A program causing a computer (20, 30) in an electronic conference system (100) to execute a process for transmitting and receiving multimedia data including at least one of sound data and video data between a plurality of terminals (10) connected to each other through a network (50) to communicate with each other in a conference in the electronic conference system, the program causing the computer to perform:
detecting an event, which is an operation that a user performs on one of the terminals (10), occurring when the plurality of terminals (10) communicate with each other in the conference;
determining a metadata type corresponding to a detected event and being associated with a source of multimedia data;
associating event information, by recording it as metadata, relating to the event with the multimedia data based on time information included in the multimedia data, a time when the event is detected and the metadata type;
receiving transmission requests for transmitting multimedia data from the terminals; and
determining whether to permit multimedia transmission by a terminal making a transmission request, wherein multimedia transmission is permitted by comparing a total number of terminals (10) having made a transmission request with a set number of terminals and a terminal permitted to perform multimedia transmission is dynamically changed in accordance with transmission requests, the set number of terminals and cancellation of multimedia transmission in a terminal, and transmitting a determination result to the terminal making the transmission request.

12. An electronic conference system (100) that transmits and receives multimedia data including at least one of sound data and video data between a plurality of terminals (10) connected to each other through a network (50) to communicate with each other and with a multimedia data management server (30) and with a terminal management server (20) in a conference, the electronic conference system comprising:
a detection section (31) that detects an event, which is an operation that a user performs on one of the terminals, when the plurality of terminals communicate with each other in the conference;
a metadata type determination section (32) that determines a metadata type corresponding to an event detected by the detection section (31) and being associated with a source of multimedia data;
an association section (35) that associates event information, by recording it as metadata, relating to the event with the multimedia data based on time information included in the multimedia data, a time when the detection section detects the event and the metadata type;
a transmission request receiving section (24) for receiving transmission requests for transmitting multimedia data from the terminals (10); and
a determination processing section (26) for determining whether to permit multimedia transmission by a terminal making a transmission request, wherein the determination processing section (26) permits multimedia transmission by comparing a total number of terminals (10) having made a transmission request with a set number of terminals and dynamically changes a terminal permitted to perform multimedia transmission in accordance with transmission requests, the set number of terminals and cancellation of multimedia transmission in a terminal, and transmitting a determination result to the terminal making the transmission request.

## Patentansprüche

1. Informationsverarbeitungsvorrichtung (30, 20), die Multimediadaten, die mindestens entweder Tondaten oder Videodaten enthalten, zwischen mehreren Endgeräten (10), die über ein Netzwerk (50) miteinander verbunden sind, um in einem elektronischen Konferenzsystem (100) bei einer Konferenz miteinander zu kommunizieren, sendet und empfängt, wobei die Informationsverarbeitungsvorrichtung (30) Folgendes umfasst:
einen Erkennungsabschnitt (31), der ein Ereignis erkennt, bei welchem es sich um eine Operation handelt, die ein Benutzer an einem der Endgeräte durchführt, wenn die mehreren Endgeräte bei der Konferenz miteinander kommunizieren;
einen Metadatentyp-Bestimmungsabschnitt (32), der einen Metadatentyp bestimmt, der einem Ereignis entspricht, das durch den Erkennungsabschnitt (31) erkannt wird, und der mit einer Quelle von Multimediadaten assoziiert ist;
einen Assoziationsabschnitt (35), der Ereignisinformationen, indem er sie als Metadaten aufzeichnet, in Bezug auf das Ereignis mit den Multimediadaten basierend auf Zeitinformationen, die in den Multimediadaten enthalten sind, einer Zeit, wann der Erkennungsabschnitt das Ereignis erkennt, und dem Metadatentyp assoziiert;
einen Übertragungsanfrage-Empfangsabschnitt (24) zum Empfangen von Übertragungsanfragen für das Übertragen von Multimediadaten von den Endgeräten (10); und
einen Bestimmungsverarbeitungsabschnitt (26) zum Bestimmen, ob eine Multimediaübertragung durch ein Endgerät, das eine Übertragungsanfrage stellt, genehmigt werden soll, wobei der Bestimmungsverarbeitungsabschnitt (26) die Multimediaübertragung durch Vergleichen einer Gesamtzahl von Endgeräten (10), die eine Übertragungsanfrage gestellt haben, mit einer eingestellten Zahl von Endgeräten genehmigt und ein Endgerät, für welches das Durchführen einer Multimediaübertragung in Übereinstimmung mit Übertragungsanfragen, der eingestellten Zahl von Endgeräten und dem Abbruch einer Multimediaübertragung in einem Endgerät genehmigt wird, dynamisch ändert, und zum Senden eines Bestimmungsergebnisses an das Endgerät, das die Übertragungsanfrage stellt.

2. Informationsverarbeitungsvorrichtung (30, 20) nach Anspruch 1, welche ferner Folgendes umfasst:
einen Empfangsabschnitt (304), der Betriebsinformationen empfängt, die Einzelheiten einer Operation angeben, die ein Benutzer an einem der Endgeräte (10) durchführt;
wobei der Metadatentyp-Bestimmungsabschnitt (32) auf einen Speicherabschnitt (303) verweist, der die Betriebsinformationen und einen Metadatentyp, der einen Typ der Ereignisinformationen entsprechend der Betriebsinformationen angibt, in Assoziation miteinander speichert, um den Metadatentyp zu bestimmen, der den Betriebsinformationen entspricht, die durch den Empfangsabschnitt empfangen werden,
wobei der Assoziationsabschnitt (35) die Ereignisinformationen, die dem Metadatentyp entsprechen, mit den Multimediadaten assoziiert.

3. Informationsverarbeitungsvorrichtung (30, 20) nach Anspruch 2, wobei
der Speicherabschnitt (303) die Betriebsinformationen, Benutzerinformationen zum Identifizieren eines Benutzers, der die Operation durchgeführt hat, und den Metadatentyp, der den Betriebsinformationen entspricht, in Assoziation miteinander speichert, und der Bestimmungsabschnitt (32) den Metadatentyp entsprechend der Betriebsinformationen, die durch den Empfangsabschnitt empfangen werden, und der Benutzerinformationen bestimmt.

4. Informationsverarbeitungsvorrichtung (30, 20) nach Anspruch 1,
wobei, wenn der Erkennungsabschnitt (31) eine Benutzeroperation zum Wechseln zwischen Seiten eines Materials, das bei einer Konferenz verwendet wird, als das Ereignis erkennt, der Assoziationsabschnitt die Ereignisinformationen, die
Zeitinformationen, die angeben, wann der Benutzer zwischen den Seiten wechselt,
eine Seitenzahl, bevor der Benutzer zwischen den Seiten wechselt, und
Benutzerinformationen des Benutzers, der zwischen den Seiten wechselt,
enthalten, mit den Multimediadaten assoziiert.

5. Informationsverarbeitungsvorrichtung (30, 20) nach Anspruch 1,
wobei, wenn der Erkennungsabschnitt (31) die Benutzeroperation zum Auswählen einer übermittelten Nachricht als das Ereignis erkennt, der Assoziationsabschnitt (35) die Ereignisinformationen, die
Zeitinformationen, die eine Zeit angeben, wann der Benutzer die Nachricht ausgewählt hat,
Einzelheiten der ausgewählten Nachricht, und Benutzerinformationen des Benutzers, der die Nachricht auswählt,
enthalten, mit den Multimediadaten assoziiert.

6. Informationsverarbeitungsvorrichtung (30, 20) nach Anspruch 1,
wobei, wenn der Erkennungsabschnitt (31) eine Operation zum Ändern eines Benutzers, der einen Vortrag bei einer Konferenz hält, als das Ereignis erkennt, der Assoziationsabschnitt (35) die Ereignisinformationen, die
Zeitinformationen, die eine Zeit angeben, wann der Benutzer, der den Vortrag hält, geändert wird, und Benutzerinformationen des Benutzers, der den Vortrag vor der Änderung hält,
enthalten, mit den Multimediadaten assoziiert.

7. Informationsverarbeitungsvorrichtung (30, 20) nach Anspruch 1, welche ferner Folgendes umfasst:
einen Empfangsabschnitt (304), der eine Anfrage zur Wiedergabe der Multimediadaten, die dem Ereignis entsprechen, von einem Benutzer empfängt; und
einen Wiedergabeabschnitt, der die Multimediadaten wiedergibt,
wobei der Wiedergabeabschnitt einen Abschnitt der Multimediadaten, der dem Ereignis entspricht, das durch den Benutzer ausgewählt wurde, wiedergibt.

8. Informationsverarbeitungsvorrichtung (30, 20) nach Anspruch 1, wobei der Erkennungsabschnitt (31) das Ereignis, das stattfindet, wenn die Endgeräte (10) die Multimediadaten miteinander kommunizieren, erkennt.

9. Informationsverarbeitungsvorrichtung (30, 20) nach Anspruch 1, wobei das Ereignis, das durch den Erkennungsabschnitt (31) erkannt wird, eines ausgewählt aus der Gruppe bestehend aus den Folgenden ist:
eine Operation eines Vortragenden zum Wechseln zwischen Seiten eines Materials, das bei der Konferenz verwendet wird, wobei der Vortragende einen Vortrag bei der Konferenz hält;
eine Operation eines Teilnehmers zum Wechseln zwischen Seiten des Materials, wobei sich der Teilnehmer von dem Vortragenden unterscheidet,
eine Operation zum Ändern des Vortragenden in eine andere Person,
eine Operation zum Beitreten zu der Konferenz,
eine Operation zum Verlassen der Konferenz,
eine Operation zum Auswählen eines Kommentars, der während der Konferenz übermittelt wird,
eine Operation zum Eingeben eines handschriftlichen Zeichens, und
eine Operation zum Summieren eines Fragebogens.

10. Informationsverarbeitungsvorrichtung (30, 20) nach Anspruch 1, wobei die Ereignisinformationen Ereignisidentifikationsinformationen, Tonzeitinformationen, die eine Tonstartzeit und eine Tonendzeit angeben, und
Informationen, die Einzelheiten des Ereignisses angeben,
enthalten.

11. Programm, das einen Computer (20, 30) in einem elektronischen Konferenzsystem (100) zum Ausführen eines Prozesses zum Senden und Empfangen von Multimediadaten, die mindestens entweder Tondaten oder Videodaten enthalten, zwischen mehreren Endgeräten (10), die über ein Netzwerk (50) miteinander verbunden sind, um in einem elektronischen Konferenzsystem bei einer Konferenz miteinander zu kommunizieren, veranlasst, wobei das Programm den Computer zum Durchführen des Folgenden veranlasst:
Erkennen eines Ereignisses, bei welchem es sich um eine Operation handelt, die ein Benutzer an einem der Endgeräte (10) durchführt, das stattfindet, wenn die mehreren Endgeräte (10) bei der Konferenz miteinander kommunizieren;
Bestimmen eines Metadatentyps, der einem erkannten Ereignis entspricht und mit einer Quelle von Multimediadaten assoziiert ist;
Assoziieren von Ereignisinformationen, durch deren Aufzeichnung als Metadaten, in Bezug auf das Ereignis mit den Multimediadaten basierend auf Zeitinformationen, die in den Multimediadaten enthalten sind, einer Zeit, wann das Ereignis erkannt wird, und dem Metadatentyp;
Empfangen von Übertragungsanfragen zum Übertragen von Multimediadaten von den Endgeräten; und
Bestimmen, ob eine Multimediaübertragung durch ein Endgerät, das eine Übertragungsanfrage stellt, genehmigt werden soll, wobei eine Multimediaübertragung durch das Vergleichen einer Gesamtzahl von Endgeräten (10), die eine Übertragungsanfrage gestellt haben, mit einer eingestellten Zahl von Endgeräten genehmigt wird und ein Endgerät mit Genehmigung zum Durchführen einer Multimediaübertragung in Übereinstimmung mit Übertragungsanfragen, der eingestellten Zahl von Endgeräten und einem Abbruch einer Multimediaübertragung in einem Endgerät dynamisch geändert wird, und
Senden eines Bestimmungsergebnisses an das Endgerät, das die Übertragungsanfrage stellt.

12. Elektronisches Konferenzsystem (100), das Multimediadaten, die mindestens entweder Tondaten oder Videodaten enthalten, zwischen mehreren Endgeräten (10), die über ein Netzwerk (50) miteinander verbunden sind, um bei einer Konferenz miteinander und mit einem Multimediadaten-Managementserver (30) und mit einem Endgeräte-Managementserver (20) zu kommunizieren, sendet und empfängt, wobei das elektronische Konferenzsystem Folgendes umfasst:
einen Erkennungsabschnitt (31), der ein Ereignis erkennt, bei welchem es sich um eine Operation handelt, die ein Benutzer an einem der Endgeräte durchführt, wenn die mehreren Endgeräte bei der Konferenz miteinander kommunizieren;
einen Metadatentyp-Bestimmungsabschnitt (32), der einen Metadatentyp bestimmt, der einem Ereignis entspricht, das durch den Erkennungsabschnitt (31) erkannt wird, und der mit einer Quelle von Multimediadaten assoziiert ist;
einen Assoziationsabschnitt (35), der Ereignisinformationen, durch deren Aufzeichnung als Metadaten, in Bezug auf das Ereignis mit den Multimediadaten basierend auf Zeitinformationen, die in den Multimediadaten enthalten sind, einer Zeit, wann der Erkennungsabschnitt das Ereignis erkennt, und dem Metadatentyp assoziiert;
einen Übertragungsanfrage-Empfangsabschnitt (24) zum Empfangen von Übertragungsanfragen für das Übertragen von Multimediadaten von den Endgeräten (10); und
einen Bestimmungsverarbeitungsabschnitt (26) zum Bestimmen, ob eine Multimediaübertragung durch ein Endgerät, das eine Übertragungsanfrage stellt, genehmigt werden soll, wobei der Bestimmungsverarbeitungsabschnitt (26) die Multimediaübertragung durch Vergleichen einer Gesamtzahl von Endgeräten (10), die eine Übertragungsanfrage gestellt haben, mit einer eingestellten Zahl von Endgeräten genehmigt und ein Endgerät, für welches das Durchführen einer Multimediaübertragung in Übereinstimmung mit Übertragungsanfragen, der eingestellten Zahl von Endgeräten und dem Abbruch einer Multimediaübertragung in einem Endgerät genehmigt wird, dynamisch ändert, und zum Senden eines Bestimmungsergebnisses an das Endgerät, das die Übertragungsanfrage stellt.

## Revendications

1. Appareil de traitement d'informations (30, 20) qui transmet et reçoit des données multimédia comprenant au moins des données parmi des données sonores et des données vidéo entre une pluralité de terminaux (10) connectés les uns aux autres à travers un réseau (50) pour communiquer les uns avec les autres lors d'une conférence dans un système de conférence électronique (100), le dispositif de traitement d'informations (30) comprenant :
une section de détection (31) qui détecte un événement, qui est une opération qu'un utilisateur effectue sur un des terminaux, lorsque la pluralité de terminaux communiquent les uns avec les autres lors de la conférence ;
une section de détermination de type de métadonnées (32) qui détermine un type de métadonnées correspondant à un événement détecté par la section de détection (31) et qui est associée à une source de donnés multimédia ;
une section d'association (35) qui associe des informations d'événement, en les enregistrant sous forme de métadonnées, relatives à l'événement avec les données multimédia sur la base des informations temporelles incluses dans les données multimédia, d'un moment où la section de détection détecte l'événement et du type de métadonnées ;
une section de réception de demandes de transmission (24) pour recevoir des demandes de transmission afin de transmettre des données multimédia à partir des terminaux (10) ; et
une section de traitement de détermination (26) pour déterminer si une transmission multimédia par un terminal effectuant une demande de transmission est autorisée ou non, dans lequel la section de traitement de détermination (26) autorise une transmission multimédia en comparant un nombre total de terminaux (10) ayant effectué une demande de transmission à un nombre établi de terminaux et change de manière dynamique un terminal autorisé à effectuer une transmission multimédia conformément à des demandes de transmission, au nombre établi de terminaux et à l'annulation d'une transmission multimédia dans un terminal, et en transmettant un résultat de détermination au terminal effectuant la demande de transmission.

2. Appareil de traitement d'informations (30, 20) selon la revendication 1, comprenant en outre :
une section de réception (304) qui reçoit des informations d'opération indiquant des détails d'une opération qu'un utilisateur effectue sur l'un des terminaux (10) ; dans lequel
la section de détermination de type de métadonnées (32) se réfère à une section de stockage (303) qui stocke les informations d'opération et un type de métadonnées indiquant un type des informations d'événement correspondant aux informations d'opération en association les uns avec les autres, pour déterminer le type de métadonnées correspondant aux informations d'opération reçues par la section de réception,
dans lequel la section d'association (35) associe les informations d'événement correspondant au type de métadonnées avec les données multimédia.

3. Appareil de traitement d'informations (30, 20) selon la revendication 2, dans lequel
la section de stockage (303) stocke les informations d'opération, des informations d'utilisateur pour identifier un utilisateur ayant effectué l'opération et le type de métadonnées correspondant aux informations d'opération en association les uns avec les autres, et
la section de détermination (32) détermine le type de métadonnées correspondant aux informations d'opération reçues par la section de réception et aux informations d'utilisateur.

4. Appareil de traitement d'informations (30, 20) selon la revendication 1,
dans lequel, lorsque la section de détection (31) détecte en tant qu'événement une opération d'utilisateur pour permuter entre des pages d'un matériel utilisé lors d'une conférence, la section d'association associe les informations d'événement incluant
des informations temporelles indiquant un moment où l'utilisateur permute entre les pages,
un numéro de page avant que l'utilisateur permute entre les pages, et
des informations d'utilisateur de l'utilisateur qui permute entre les pages,
avec les données multimédia.

5. Appareil de traitement d'informations (30, 20) selon la revendication 1,
dans lequel, lorsque la section de détection (31) détecte une opération d'utilisateur pour sélectionner un message soumis en tant qu'événement, la section d'association (35) associe les informations d'événement, incluant
des informations temporelles indiquant un moment où l'utilisateur a sélectionné le message,
des détails du message sélectionné, et
des informations d'utilisateur de l'utilisateur qui sélectionne le message,
avec les données multimédia.

6. Appareil de traitement d'informations (30, 20) selon la revendication 1,
dans lequel, lorsque la section de détection (31) détecte une opération de changement d'un utilisateur qui fait une présentation lors d'une conférence en tant qu'événement, la section d'association (35) associe les informations d'événement incluant
des informations temporelles indiquant un moment où l'utilisateur qui effectue la présentation est changé, et
des informations d'utilisateur de l'utilisateur qui effectue la présentation avant le changement,
avec les données multimédia.

7. Appareil de traitement d'informations (30, 20) selon la revendication 1, comprenant en outre :
une section de réception (304) qui reçoit d'un utilisateur une demande de reproduction des données multimédia correspondant à l'événement ; et
une section de reproduction qui reproduit les données multimédia,
dans lequel la section de reproduction reproduit une partie, correspondant à l'événement sélectionné par l'utilisateur, des données multimédia.

8. Appareil de traitement d'informations (30, 20) selon la revendication 1, dans lequel la section de détection (31) détecte l'événement qui se produit lorsque les terminaux (10) communiquent les données multimédia les uns avec les autres.

9. Appareil de traitement d'informations (30, 20) selon la revendication 1, dans lequel l'événement détecté par la section de détection (31) est choisi parmi le groupe constitué de :
une opération de présentateur pour permuter entre des pages d'un matériel utilisé lors de la conférence, le présentateur faisant une présentation lors de la conférence,
une opération de participant pour permuter entre des pages du matériel, le participant étant différent du présentateur,
une opération pour changer le présentateur en une autre personne,
une opération pour entrer dans la conférence,
une opération pour quitter la conférence,
une opération pour sélectionner un commentaire soumis lors de la conférence,
une opération pour entrer un caractère manuscrit, et
une opération pour totaliser un questionnaire.

10. Appareil de traitement d'informations (30, 20) selon la revendication 1, dans lequel les informations d'événement incluent
des informations d'identification d'événement,
des informations de période sonore indiquant un moment de début de son et un moment de fin de son, et
des informations indiquant des détails de l'événement.

11. Programme amenant un ordinateur (20, 30) dans un système de conférence électronique (100) à exécuter un processus de transmission et de réception de données multimédia comprenant au moins des données parmi des données sonores et des données vidéo entre une pluralité de terminaux (10) connectés les uns aux autres à travers un réseau (50) pour communiquer les uns avec les autres lors d'une conférence dans le système de conférence électronique, le programme amenant l'ordinateur à effectuer les étapes consistant à :
détecter un événement, qui est une opération qu'un utilisateur effectue sur l'un des terminaux (10), se produisant lorsque la pluralité de terminaux (10) communiquent les uns avec les autres lors de la conférence ;
déterminer un type de métadonnées correspondant à un événement détecté et qui est associé à une source de données multimédia ;
associer des informations d'événement, en les enregistrant sous forme de métadonnées, relatives à l'événement avec les données multimédia sur la base des informations temporelles incluses dans les données multimédia, d'un moment où l'événement est détecté et du type de métadonnées ;
recevoir des demandes de transmission pour transmettre des données multimédia à partir des terminaux ; et
déterminer si la transmission multimédia par un terminal effectuant une demande de transmission est autorisée ou non, dans lequel la transmission multimédia est autorisée en comparant un nombre total de terminaux (10) ayant fait une demande de transmission à un nombre établi de terminaux et un terminal autorisé à effectuer une transmission multimédia est changé de manière dynamique conformément à des demandes de transmission, au nombre établi de terminaux et à l'annulation d'une transmission multimédia dans un terminal, et en transmettant un résultat de détermination au terminal effectuant la demande de transmission.

12. Système de conférence électronique (100) qui transmet et reçoit des données multimédia comprenant au moins des données parmi des données sonores et des données vidéo entre une pluralité de terminaux (10) connectés les uns aux autres à travers un réseau (50) pour communiquer avec les uns avec les autres et avec un serveur de gestion de données multimédia (30) et avec un serveur de gestion de terminal (20) lors d'une conférence, le système de conférence électronique comprenant :
une section de détection (31) qui détecte un événement, qui est une opération qu'un utilisateur effectue sur l'un des terminaux, lorsque la pluralité de terminaux communiquent les uns avec les autres lors de la conférence ;
une section de détermination de type de métadonnées (32) qui détermine un type de métadonnées correspondant à un événement détecté par la section de détection(31) et qui est associée à une source de données multimédia ;
une section d'association (35) qui associe des informations d'événement, en les enregistrant sous forme de métadonnées, relatives à l'événement avec les données multimédia sur la base des informations temporelles incluses dans les données multimédia, d'un moment où la section de détection détecte l'événement et du type de métadonnées ;
une section de réception de demandes de transmission (24) pour recevoir des demandes de transmission afin de transmettre des données multimédia à partir des terminaux (10) ; et
une section de traitement de détermination (26) pour déterminer si une transmission multimédia par un terminal effectuant une demande de transmission est autorisée ou non, dans lequel la section de traitement de détermination (26) autorise une transmission multimédia en comparant un nombre total de terminaux (10) ayant effectué une demande de transmission à un nombre établi de terminaux et change de manière dynamique un terminal autorisé à effectuer une transmission multimédia conformément à des demandes de transmission, au nombre établi de terminaux et à l'annulations d'une transmission multimédia dans un terminal, et en transmettant un résultat de détermination au terminal effectuant la demande de transmission.
